# EUROPEAN PATENT SPECIFICATION

(11) **EP 4 465 530 B1**
(45) Date of publication and mention of the grant of the patent: **26.11.2025**
(21) Application number: 24168625.2
(22) Date of filing: 05.04.2024
(51) Int. Cl.: H02S 30/10, F24S 25/20, H02S 20/23, F24S 25/61, F24S 25/636

(54) **PHOTOVOLTAIC FACILITY**
FOTOVOLTAISCHE ANLAGE
INSTALLATION PHOTOVOLTAÏQUE

(30) Priority: 19.05.2023 CN 202310583951; 24.11.2023 CN 202311586199; 24.11.2023 CN 202311586049; 24.11.2023 CN 202311585101; 24.11.2023 CN 202323195621 U; 24.11.2023 CN 202311584940
(43) Date of publication of application: 20.11.2024
(73) Proprietor: JINKO SOLAR CO., LTD, ShangRao, Jiangxi 334100 (CN); Jinko Solar (Haining) Co., Ltd., Haining City, Zhejiang 314415 (CN)
(72) Inventor: YANG, Sen, SHANGRAO, 334100 (CN); LV, Pengyu, SHANGRAO, 334100 (CN); XIAO, Pengjun, SHANGRAO, 334100 (CN); SHEN, Wei, SHANGRAO, 334100 (CN); OU, Peng, SHANGRAO, 334100 (CN); DENG, Zhiliang, SHANGRAO, 334100 (CN); YANG, Fei, SHANGRAO, 334100 (CN); WANG, Boyang, SHANGRAO, 334100 (CN); Tong, Yu, SHANGRAO, 334100 (CN); CHENG, Yi, SHANGRAO, 334100 (CN); ZHAO, Liangyin, SHANGRAO, 334100 (CN)
(74) Representative: DREISS Patentanwälte PartG mbB

(56) References cited:
- CN-A- 114 892 902
- CN-A- 118 971 739
- CN-U- 213 837 372
- CN-U- 215 484 176
- CN-U- 216 904 749
- CN-U- 221 664 061
- US-A1- 2014 360 558

## Description

### TECHNICAL FIELD

The present invention relates to the technical field of photovoltaics, and in particular, to a photovoltaic facility.

### BACKGROUND

As an important part of a roof power station, a photovoltaic facility converts received solar energy into electrical energy for daily requirements. However, in current photovoltaic facility, stability of the mounted photovoltaic facility is poor, resulting in low wind-tearing resistance, which affects normal operation of the photovoltaic facility. Prior art document CN 213837372 U discloses a photovoltaic color steel tile component, including a color steel tile body provided with a locking edge, a connecting member fixedly connected with the locking edge, and a photovoltaic module. The photovoltaic module and an end of the first part of the connecting member facing away from the color steel tile body are bonded and fixed by an adhesive material.

### SUMMARY

In view of this, the present invention provides a photovoltaic facility as defined in claim 1.

The photovoltaic facility includes: a clamp, a color steel tile, a photovoltaic module, and a connecting member. The clamp is connected to the color steel tile and includes a clamping body. The photovoltaic module is located on one side of the clamping body and is connected to the clamping body through the connecting member. The photovoltaic module includes a laminate and a frame. The frame is connected to a back side of the laminate and has an opening. The connecting member extends into the opening and abuts against a sidewall of the opening. The photovoltaic module is connected to the color steel tile through the clamp.

In some embodiments, the sidewall of the opening is provided with an extension portion, the connecting member includes an engaging groove, and the extension portion extends into the engaging groove and is engaged with the engaging groove. The engaging groove includes a first engaging portion, the first engaging portion is located in the frame, and the first engaging portion is capable of abutting against a sidewall of the frame along a width direction of the photovoltaic module. Along a height direction of the photovoltaic module, the first engaging portion includes a first end abutting against a top wall of the frame and a second end abutting against the extension portion.

In some embodiments, the clamp further includes a first fastener configured to connect the connecting member and the clamping body. The clamping body is provided with a first mounting hole, and the first fastener is connected to the clamping body through the first mounting hole. The connecting member is provided with a second mounting hole, and the first fastener is connected to the connecting member through the second mounting hole. The second mounting hole is a waist-shaped hole, and when the first fastener extends into the second mounting hole, the connecting member is movable relative to the first fastener.

In some embodiments, the connecting member includes a limiting groove extending towards the color steel tile along a height direction of the photovoltaic module, and part of the frame is received in the limiting groove. The photovoltaic facility further includes a limiting member located on a side of the connecting member away from the clamping body and connected to the connecting member. The limiting member includes a limiting portion capable of extending into the limiting groove, and along a width direction of the photovoltaic module, the limiting portion includes a first end abutting against a sidewall of the limiting groove and a second end abutting against the frame.

In some embodiments, along the width direction of the photovoltaic module, the sidewall of the limiting groove extends obliquely away from the frame, and the limiting portion includes an inclined guide surface configured to fit the sidewall of the limiting groove.

The clamp includes two symmetrically arranged clamping bodies, along a width direction of the photovoltaic module, a clamping space is provided between the two clamping bodies, and part of the color steel tile is capable of extending into the clamping space. A sidewall of the clamping space extends along a height direction of the photovoltaic module.

The clamp includes two symmetrically arranged clamping bodies, along a width direction of the photovoltaic module, a clamping space is provided between the two clamping bodies, and part of the color steel tile is capable of extending into the clamping space. A sidewall of the clamping space has an arc-shaped structure that protrudes outwards along a width direction of the photovoltaic module.

In some embodiments, the frame includes two first frames arranged opposite to each other along a width direction of the photovoltaic module, and/or, the frame includes two second frames arranged opposite to each other along a length direction of the photovoltaic module.

In some embodiments, the frame further includes at least one reinforcing frame. Along the length direction of the photovoltaic module, the at least one reinforcing frame is arranged between the two second frames, and/or, along the width direction of the photovoltaic module, the at least one reinforcing frame is arranged between the two first frames.

In some embodiments, the frame includes two first frames arranged opposite to each other along a width direction of the photovoltaic module, two second frames opposite to each other along a length direction of the photovoltaic module, and a reinforcing frame connecting the two first frames. Two ends of each first frame are welded to the two second frames respectively, and a middle part of each first frame is welded to the reinforcing frame to form the frame.

In some embodiments, the frame includes two first frames arranged opposite to each other along a width direction of the photovoltaic module, two second frames opposite to each other along a length direction of the photovoltaic module, a reinforcing frame, and insertion rods. Two ends of each first frame are welded to the two second frames respectively, a middle part of each first frame is welded to a first end of the insertion rod, and a second end of the insertion rod is in insertion fit with the reinforcing frame.

In some embodiments, the frame includes two first frames arranged opposite to each other along a width direction of the photovoltaic module, two second frames opposite to each other along a length direction of the photovoltaic module, a reinforcing frame, and corner connecting members. Each corner connecting member includes a first section extending along the width direction of the photovoltaic module and a second section extending along the length direction of the photovoltaic module. Two ends of each first frame are inserted into the second sections of two corner connecting members respectively, two ends of each second frame are inserted into the first sections of two corner connecting members respectively, and a middle part of each first frame is welded to the reinforcing frame.

In some embodiments, the frame includes two first frames arranged opposite to each other along a width direction of the photovoltaic module, two second frames opposite to each other along a length direction of the photovoltaic module, a reinforcing frame, insertion rods, and corner connecting members. Each corner connecting member includes a first section extending along the width direction of the photovoltaic module and a second section extending along the length direction of the photovoltaic module. Two ends of each first frame are inserted into the second sections of two corner connecting members respectively, two ends of each second frame are inserted into the first sections of two corner connecting members respectively, a middle part of each first frame is welded to a first end of the insertion rod, and a second end of the insertion rod is in insertion fit with the reinforcing frame.

In some embodiments, the frame includes two first frames arranged opposite to each other along a width direction of the photovoltaic module, two second frames opposite to each other along a length direction of the photovoltaic module, a reinforcing frame, and corner connecting members. Each first frame includes a plurality of first frame segments and one or more inserts, each insert includes a third section extending along the width direction of the photovoltaic module and a fourth section extending along the length direction of the photovoltaic module, and adjacent first frame segments are connected by the third section. Each corner connecting member includes a first section extending along the width direction of the photovoltaic module and a second section extending along the length direction of the photovoltaic module. Two ends of each first frame are inserted into the second sections of two corner connecting members respectively, two ends of each second frame are inserted into the first sections of two corner connecting members respectively, and the fourth section of the insert is in insertion fit with the reinforcing frame.

In some embodiments, the clamp includes two clamp bodies defining a clamping space. Each color steel tile includes a male rib and a female rib, and the male rib and the female rib of two adjacent color steel tiles are engaged with each other and accommodated in the clamping space. First ends of the two clamp bodies are fixed, and second ends of the two clamp bodies are fixed to the two adjacent color steel tiles respectively. The photovoltaic facility further includes a supporter, and the supporter includes a first end engaged with the male rib and the female rib of two adjacent color steel tiles and a second end fixed to a ground or a roof.

In embodiments of the present invention, the frame is arranged on a back surface of the laminate, and the photovoltaic module is mounted to the color steel tile through the clamp, which improves stability of the photovoltaic module on the color steel tile and improves wind resistance of the photovoltaic module. The photovoltaic module is connected to the clamping body through the connecting member, and the connecting member is in abutment fit with the sidewall of the opening of the frame, so as to limit the photovoltaic module, which reduces a possibility of sliding or fall-off of the photovoltaic module from the clamp under an external force, improves stability and reliability of the connection between the photovoltaic module and the clamping body, and also further improves wind resistance of the photovoltaic module, thereby realizing overall normal and stable operation of the photovoltaic facility.

It should be understood that the general description above and the detailed descriptions in the following are merely exemplary and illustrative.

### BRIEF DESCRIPTION OF DRAWINGS

In order to illustrate the technical solutions of the embodiments of the present invention more clearly, the accompanying drawings required to be used in the embodiments will be briefly introduced below. Obviously, the accompanying drawings in the following description are only some embodiments of the present invention. For those of ordinary skill in the art, other accompanying drawings may also be obtained based on these accompanying drawings without any creative efforts.
FIG. 1 is a schematic structural diagram of a photovoltaic facility according to some embodiments of the present invention;
FIG. 2 is a schematic structural diagram of a color steel tile in FIG. 1;
FIG. 3 is a schematic structural diagram of a photovoltaic module in FIG. 1;
FIG. 4 is a schematic structural diagram of a frame in FIG. 3 according to a first embodiment;
FIG. 5 is a schematic structural diagram of the frame in FIG. 3 according to a second embodiment;
FIG. 6 is a schematic structural diagram of assembly of a connecting member and the photovoltaic module in FIG. 1;
FIG. 7 is a schematic structural diagram of assembly of the connecting member and the frame in FIG. 6 according to another embodiment;
FIG. 8 is a schematic structural diagram of assembly of the connecting member and the frame in FIG. 6 according to another embodiment;
FIG. 9 is a schematic structural diagram of assembly of the connecting member and the frame in FIG. 6 according to another embodiment;
FIG. 10 is a schematic structural diagram of assembly of the connecting member and the frame in FIG. 6 according to another embodiment;
FIG. 11 is a schematic structural diagram of the frame in FIG. 3 according to a third embodiment;
FIG. 12 is a schematic structural diagram of the frame in FIG. 3 according to a fourth embodiment;
FIG. 13 is a schematic diagram of a partial structure of the photovoltaic facility in FIG. 1;
FIG. 14 is a schematic structural diagram of a connecting member in FIG. 13;
FIG. 15 is a schematic structural diagram of assembly of the connecting member, a limiting member, and the frame in FIG. 1 according to some embodiments;
FIG. 16 is a schematic structural diagram of assembly of the connecting member, the limiting member, and the frame in FIG. 1 according to some embodiments;
FIG. 17 is a schematic structural diagram of assembly of the connecting member, the limiting member, and the frame in FIG. 1 according to some embodiments;
FIG. 18 is a schematic structural diagram of assembly of a clamp and the photovoltaic module in FIG. 1 according to the first embodiment;
FIG. 19 is a schematic structural diagram of assembly of the clamp and the photovoltaic module in FIG. 1 according to the second embodiment;
FIG. 20 is a schematic structural diagram of the photovoltaic facility according to the second embodiment of the present invention;
FIG. 21 is a schematic structural diagram of the photovoltaic facility in FIG. 20 according to some embodiments;
FIG. 22 is a schematic structural diagram of a first pressing portion in FIG. 21;
FIG. 23 is a schematic structural diagram of assembly of the first pressing portion and a second gasket in FIG. 21;
FIG. 24 is a schematic structural diagram of a third gasket in FIG. 21;
FIG. 25 is a schematic structural diagram of the photovoltaic facility in FIG. 20 according to some embodiments;
FIG. 26 is a schematic structural diagram of the photovoltaic facility in FIG. 20 according to some embodiments;
FIG. 27 is a schematic structural diagram of the photovoltaic facility according to the third embodiments of the present invention;
FIG. 28 is a schematic structural diagram of a photovoltaic module in FIG. 27;
FIG. 29 is a schematic structural diagram of the photovoltaic facility in FIG. 27 according to some embodiments;
FIG. 30 is a schematic structural diagram of the photovoltaic facility in FIG. 27 according to some embodiments;
FIG. 31 is a schematic structural diagram of a fourth gasket in FIG. 30;
FIG. 32 is a schematic structural diagram of assembly of a connection pressing member and a frame in FIG. 27 according to some embodiments;
FIG. 33 is a schematic diagram of structural fitting of a second positioning groove and a second positioning protrusion in FIG. 27 according to some embodiments;
FIG. 34 is a schematic diagram of structural fitting of the second positioning groove and the second positioning protrusion in FIG. 27 according to some embodiments;
FIG. 35 is a schematic structural diagram of the photovoltaic module in FIG. 27 according to some embodiments;
FIG. 36 is a schematic structural diagram of the photovoltaic module in FIG. 27 according to some embodiments;
FIG. 37 is a bottom view of the photovoltaic module according to the first embodiment of the present invention;
FIG. 38 is a bottom view of the photovoltaic module according to the second embodiment of the present invention;
FIG. 39 is a bottom view of the photovoltaic module according to the third embodiment of the present invention;
FIG. 40 is a bottom view of the photovoltaic module according to the fourth embodiment of the present invention;
FIG. 41 is a bottom view of the frame according to the first embodiment of the present invention;
FIG. 42 is a bottom view of the frame according to the second embodiment of the present invention;
FIG. 43(a) to FIG. 43(b) are schematic structural diagrams of a frame structure according to the first embodiment of the present invention;
FIG. 44(a) to FIG. 44(b) are schematic structural diagrams of the frame structure according to the second embodiment of the present invention;
FIG. 45(a) to FIG. 45(b) are schematic structural diagrams of the frame structure according to the third embodiment of the present invention;
FIG. 46(a) to FIG. 46(b) are schematic structural diagrams of the frame structure according to the fourth embodiment of the present invention;
FIG. 47(a) to FIG. 47(b) are schematic structural diagrams of the frame structure according to the fifth embodiment of the present invention;
FIG. 48 is a flowchart of assembly of the frame in FIG. 1 according to the present invention;
FIG. 49 is a flowchart of assembly of the frame in FIG. 43(a) to FIG. 43(b);
FIG. 50 is a flowchart of assembly of the frame in FIG. 44(a) to FIG. 44(b);
FIG. 51 is a flowchart of assembly of the frame in FIG. 44(a) to FIG. 44(b);
FIG. 52 is a flowchart of assembly of the frame in FIG. 45(a) to FIG. 45(b);
FIG. 53 is a flowchart of assembly of the frame in FIG. 45(a) to FIG. 45(b);
FIG. 54 is a flowchart of assembly of the frame in FIG. 46(a) to FIG. 46(b); and
FIG. 55 is a flowchart of assembly of the frame in FIG. 47(a) to FIG. 47(b).

### Reference signs:

1: clamp;
11: clamping body;
   111: first mounting hole;
   112: first bearing groove;
   113: first pressing portion;
      113A: first protrusion;
      113B: first mounting groove;
   114: body portion;
   115: mounting cavity;
   116: second limiting protrusion;
   117: positioning fitting portion;
   118: positioning portion;
   119: second bearing groove;
   110: second positioning groove;
12: clamping space;
2: color steel tile;
   21: locking structure;
   22: male rib;
   23: female rib;
3: photovoltaic module;
   31: laminate;
      31A: first surface;
      32B: second surface;
      311: first edge;
      312: second edge;
   32: frame;
      32A: first portion;
         32Aa: adhesive groove;
         32Ab: connecting rib;
      32B: second portion;
      32C: third portion;
      32D: accommodating space;
      32E: first section;
         32Ea: accommodating groove;
         32Eb: blocking portion;
      32F: second section;
         32Fa: third limiting protrusion;
      32G: third section;
         32Ga: reinforcing rib;
      32H: flanging;
      32I: supporting portion;
      32J: limiting bulge;
      3201: first frame (first sub-frame);
         3201A: first frame segment;
         3201B: insert
            3201Ba: third section;
            3201Bb: fourth section;
      3202: second frame (first sub-frame);
      3203: reinforcing frame;
         3203A: third frame;
         3203B: fourth frame;
      3204: insertion rod;
      3205: corner connecting member;
         3205A: first section;
         3205B: second section;
      321: opening;
      322: extension portion;
         322A: second hook structure;
   33: connecting adhesive;
      331: first bonding body;
      332: second bonding body;
   34: third hook structure;
4: connecting member;
   41: engaging groove;
      411: first engaging portion;
         411A: recessed portion;
         411B: first hook structure;
         411C: first limiting protrusion;
   41A: first side arm;
   41B: second side arm;
   42: first mounting portion;
      421: second mounting hole;
   43: limiting groove;
   44: fourth hook structure;
   45: receiving groove;
   46: first positioning groove;
   47: recess;
   48: third convex portion;
5: first adhesive jacket;
   51: protruding portion;
6: first fastener;
   61: rod portion;
7: limiting member;
   71: limiting portion;
      711: guide surface;
      712: first convex portion;
      713: second convex portion;
   72: first positioning protrusion;
   73: third mounting hole;
8: second adhesive jacket;
9: second fastener;
10: bracket;
20: pressing block;
   201: second mounting groove;
30: mounting block;
40: second gasket;
   401: second protrusion;
50: third gasket;
   501: first main body portion;
   502: second main body portion;
   503: third protrusion;
60: connection pressing member;
   601: second pressing portion;
      601A: first pressing section;
      601B: second pressing section;
      601C: pressing body;
      601D: pressing protrusion;
      601E: third mounting groove;
   602: limiting section;
   603: second mounting portion;
   604: second positioning protrusion;
70: fourth gasket;
   701: mounting fitting portion;
   702: protruding structure.

### DESCRIPTION OF EMBODIMENTS

In order to better understand the technical solution of the present invention, embodiments of the present invention are described in detail below with reference to the accompanying drawings.

It should be clear that the embodiments described are only some rather than all of the embodiments of the present invention. All other embodiments acquired by those of ordinary skill in the art without creative efforts based on the embodiments of the present invention fall within the protection scope of the present invention.

The terms used in the embodiments of the present invention are intended solely to describe particular embodiments and are not intended to limit the present invention. As used in the embodiments of the present invention and the appended claims, the singular forms of "a/an", "said", and "the" are intended to include plural forms, unless otherwise clearly specified in the context.

It should be understood that the term "and/or" used herein only describes an association relationship between associated objects and represents that three relationships may exist. For example, A and/or B may represent the following three cases: only A exists, both A and B exist, and only B exists. In addition, the character "/" herein generally means that associated objects before and after it are in an "or" relationship.

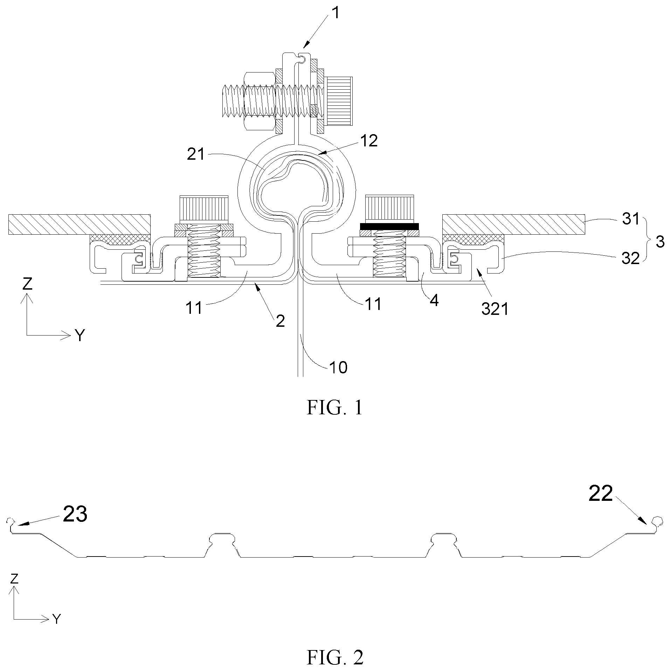

Some embodiments of the present invention provide a photovoltaic facility, including a clamp 1, a color steel tile 2, a photovoltaic module 3, and a connecting member 4. In the example shown in FIG. 1, two color steel tiles 2 and two photovoltaic modules 3 are illustrated. The clamp 1 is connected to the color steel tile 2, and the clamp 1 includes a clamping body 11. The photovoltaic module 3 is located on one side of the clamping body 11 and connected to the clamping body 11 through the connecting member 4. The photovoltaic module 3 includes a laminate 31 and a frame 32. The laminate 31 has a front side facing sunlight and a back side opposite to the first side. The frame 32 is connected to a back side of the laminate 31. The frame 32 has an opening 321. The connecting member 4 is configured to extend into the opening 321 and abut against a sidewall of the opening 321.

As shown in FIG. 2, along a width direction Y of the photovoltaic facility, the color steel tile 2 includes a male rib 22 and a female rib 23. The male rib 22 and female rib 23 of two adjacent color steel tiles 2 overlap and are engaged with each other to form a locking structure 21 of the two adjacent color steel tiles 2, and the clamp 1 clamps the locking structure 21 of the color steel tiles 2. The connecting member 4 has a first end connected to the clamping body 11 of the clamp 1 and a second end connected to the photovoltaic module 3, thereby realizing a connection between the photovoltaic module 3 and the color steel tile 2. The photovoltaic facility further includes a support member 10. The support member 10 has a first end overlapping and engaged with the locking structure 21 and a second end fixedly connected to the ground or a building. For example, the second end is fixedly connected to a roof or a wall of the building. The building, for example, includes production-oriented enterprise factories and warehouses.

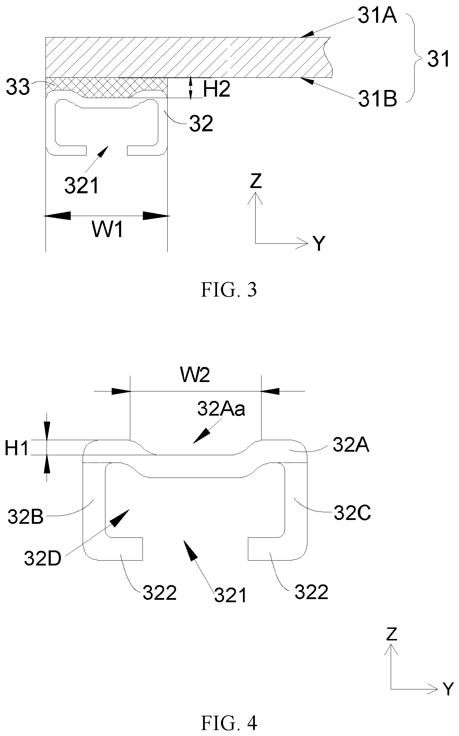

As shown in FIG. 3, the photovoltaic module 3 includes a laminate 31 and a frame 32. The laminate 31 has a first surface 31A and a second surface 31B arranged opposite to each other along a height direction Z of the photovoltaic module 3. The first surface 31A receives sunlight, and the second surface 31B is a side that faces away from the sunlight. The frame 32 is connected to the second surface 31B. A bottom wall of the frame 32 is provided with an opening 321 along the height direction Z of the photovoltaic module 3, and one end of the connecting member 4 extends into the frame 32 through the opening 321 and abuts against a sidewall of the opening 321. For example, the connecting member 4 may abut against the sidewall of the opening 321 along the width direction Y of the photovoltaic module 3 and/or the height direction Z of the photovoltaic module 3, so that the connecting member 4 and the photovoltaic module 3 are connected together.

The photovoltaic facility provided above has an overall structure with high stability and has excellent wind-tearing resistance. For example, the photovoltaic module 3 is provided with the frame 32. The frame 32 can support the laminate 31 and protect the laminate 31, which reduces damages to the laminate 31 by an external force during transportation, mounting, and use, thereby improving stability of an overall structure of the photovoltaic module 3, prolonging a service life of the photovoltaic module 3, and improving operational stability of the photovoltaic module 3. At the same time, the frame 32 is arranged on a back surface of the laminate 31, so the frame 32 does not block the light-facing surface of the laminate 31, that is, reduces a light-shielding area, thereby improving efficiency of the photovoltaic module 3 and improving reliability of the entire photovoltaic facility. The above photovoltaic module 3 is connected to the color steel tile 2 through the clamp 1, thereby improving stability of mounting of the photovoltaic module 3 on the color steel tile 2 and improving load resistance of the photovoltaic module 3, that is, improving wind-tearing resistance of the photovoltaic module 3. The photovoltaic module 3 is connected to the clamping body 11 through the connecting member 4, and the connecting member 4 is in abutment fit with the sidewall of the opening 321 of the frame 32, so as to limit the photovoltaic module 3. This reduces a possibility of sliding or fall-off of the photovoltaic module 3 from the clamp 1 under an external force, improves stability and reliability of the connection between the photovoltaic module 3 and the clamping body 11, and also further improves wind-tearing resistance of the photovoltaic module 3, thereby realizing overall normal and stable operation of the photovoltaic facility.

Referring to FIG. 3 and FIG. 4 together, the frame 32 includes a first portion 32A, a second portion 32B, and a third portion 32C. Along a width direction Y of the frame 32, the second portion 32B and the third portion 32C are connected to two ends of the first portion 32A respectively. The second portion 32B and the third portion 32C extend along the height direction Z of the photovoltaic module 3. The first portion 32Ais fixedly connected to the second surface 31B. During the mounting, transportation, and use of the photovoltaic module 3, if the photovoltaic module 3 is subjected to a force along its height direction Z (that is, the photovoltaic module 3 is under tension or compression), the first portion 32A can deform synchronously with the laminate 31, and the second portion 32B and the third portion 32C can also deform under the driving of the first portion 32A, that is, the force acting on the frame 32 is counteracted by the deformation of the first portion 32A, the second portion 32B, and the third portion 32C, thereby reducing a risk of damages to the frame 32, prolonging the service life of the frame 32, and improving operational stability of the frame 32. Further, along the width direction Y of the frame 32, the second portion 32B and the third portion 32C are respectively arranged at two ends of the first portion 32A, so that a cross section of the frame 32 is in an inverted U shape, and a local load on the first portion 32A can be transferred to the second portion 32B and the third portion 32C on two sides along the width direction Y, which prevents stress concentration, thereby improving structural stability of the frame 32 and improving rigidity and stability of the photovoltaic module 3.

For example, a width of the first portion 32A is W1, and 10 mm≤W1≤20 mm. W1 may be, for example, 10 mm, 10.5 mm, 12 mm, 13.5 mm, 14 mm, 15.5 mm, 16 mm, 17.5 mm, 18 mm, 19.5 mm, or 20 mm, or may be other values in the above range, which is not limited in the present invention.

If W1 is excessively small (e.g., less than 10 mm), the width of the first portion 32A may be excessively narrow, resulting in an excessively small area of contact between the frame 32 and the laminate 31, which affects a supporting effect of the frame 32 on the laminate 31. As a result, the rigidity of the photovoltaic module 3 cannot be highly improved. If W1 is excessively large (e.g., greater than 20 mm), the width of the first portion 32A may be excessively wide, which may not improve the supporting effect of the frame 32 to a better level, whereas may waste materials and increase manufacturing costs of the frame 32, and may also increase a weight of the frame 32, affecting a lightweight effect of the photovoltaic module 3. Therefore, when the dimension W1 of the first portion 32A ranges from 10 mm to 20 mm, it improves stability of the structure of the frame 32 and reduces a possibility of bending and deformation of the frame 32 under an external force, which can ensure that the frame 32 provides reliable support for the laminate 31, improve rigidity and structural stability of the photovoltaic module 30, and at the same time, can also appropriately reduce the weight of the frame 32 and reduce manufacturing costs of the photovoltaic module 3.

The first portion 32A and the laminate 31 are bonded and fixed by a connecting adhesive 33. When the frame 32 is mounted on the second surface 31B, the connecting adhesive 33 is applied to the first portion 32A first, and then the frame 32 is bonded to the second surface 31B of the laminate 31 through the connecting adhesive 33. After the above bonding step, in order to improve reliability of the adhesive connection, a tool may generally be used to press the laminate 31 and the frame 32 along the height direction Z of the photovoltaic module 3 to ensure that a connection area of the connecting adhesive 33 between the first portion 32A and the second surface 31B is large enough. However, during the pressing, the connecting adhesive 33 may overflow from the first portion 32A, resulting in an insufficient thickness of the connecting adhesive 33 remaining between the first portion 32A and the second surface 31B and a reduction in an adhesion effect, thereby affecting reliability of the connection between the laminate 31 and the frame 32.

In order to solve the above problem, in the present invention, an adhesive groove 32Aa configured to accommodate the connecting adhesive 33 is arranged on the first portion 32A. As shown in FIG. 3 and FIG. 4, along the height direction Z of the photovoltaic module 3, at least part of the first portion 32A is recessed in a direction away from the photovoltaic module 3 to form the adhesive groove 32Aa. The adhesive groove 32Aa is configured to accommodate at least part of the connecting adhesive 33. When the frame 32 is mounted on the second surface 31B, the adhesive groove 32Aa may be first filled with the connecting adhesive 33, then the frame 32 is bonded to the second surface 31B of the laminate 31 through the connecting adhesive 33, and finally, the laminate 31 and the frame 32 are pressed along the height direction Z of the photovoltaic module 3 by a tool. Since the adhesive groove 32Aa is filled with the connecting adhesive 33, even if part of the connecting adhesive 33 is extruded out of the first portion 32A, there is still sufficient connecting adhesive 33 in the adhesive groove 32Aa. This part of the connecting adhesive 33 can be stably connected to the second surface 31B, that is, the adhesive groove 32Aa can receive the connecting adhesive 33, thereby reducing a possibility of overflow in the frame 32 and improving reliability and stability of the connection between the frame 32 and the laminate 31.

For example, along the height direction Z of the photovoltaic module 3, a depth H1 of the adhesive groove 32Aa ranges from 1 mm to 2 mm. For example, H1 may be 1 mm, 1.05 mm, 1.2 mm, 1.35 mm, 1.4 mm, 1.5 mm, 1.65 mm, 1.7 mm, 1.8 mm, 1.85 mm, 1.9 mm, or 2 mm, or may be other values in the above range, which is not limited in the present invention.

If H1 is excessively small (e.g., less than 1 mm), the depth of the adhesive groove 32Aa is excessively small, the thickness of the connecting adhesive 33 located in the adhesive groove 32Aa is excessively small, the adhesive groove 32Aa has a poor anti-overflow effect, and the connecting adhesive 33 easily overflows from the adhesive groove 32Aa to the outside of the frame 32, which may affect reliability of adhesion between the frame 32 and the laminate 31, resulting in a reduction in structural stability of the photovoltaic module 3. If H1 is excessively large (e.g., greater than 2 mm), the depth of the adhesive groove 32Aa is excessively large, which may lead to a waste of the connecting adhesive 330 and may not significantly further improve stability of the connection between the frame 32 and the laminate 31. At the same time, this also increases the weight of the connecting adhesive 33, causing a heavy photovoltaic facility, and it is difficult to meet a load-bearing requirement of a building. Therefore, when the depth H1 of the adhesive groove 32Aa ranges from 1 mm to 2 mm, a stable connection between the frame 32 and the laminate 31 can be ensured, and the cost of the photovoltaic module 3 can be appropriately reduced.

Moreover, along the width direction Y of the frame 32, a width W2 of the adhesive groove 32Aa ranges from 4 mm to 12 mm. For example, W2 may be 4 mm, 5 mm, 6 mm, 6.5 mm, 7 mm, 8 mm, 9 mm, 9.5 mm, 10 mm, 11 mm, 11.5 mm, or 12 mm, or may be other values in the above range, which is not limited in the present invention.

If W2 is excessively small (e.g., less than 4 mm), a width of the adhesive groove 32Aa is excessively small, leading to an excessively small connection area between the connecting adhesive 33 in the adhesive groove 32Aa and the laminate 31, which may affect reliability of adhesion between the frame 32 and the laminate 31, resulting in a reduction in structural stability of the photovoltaic module 3. If W2 is excessively large (e.g., greater than 12 mm), the width of the adhesive groove 32Aa is excessively large, and a large amount of the connecting adhesive 33 is required when the thickness of the connecting adhesive 33 meets a machining requirement, which may lead to a waste of the connecting adhesive 33 and may not significantly further improve stability of the connection between the frame 32 and the laminate 31. Therefore, when the width W1 of the adhesive groove 32Aa ranges from 4 mm to 12 mm, a stable connection between the frame 32 and the laminate 31 can be ensured, and the cost of the photovoltaic module 3 can be appropriately reduced.

Based on the above, in some embodiments of the present invention, the depth and the width of the adhesive groove 32Aa are limited, and a volume of the adhesive groove 32Aa is limited, so that the adhesive groove 32Aa can provide a sufficient receiving space for the connecting adhesive 33, which, at the same time, further improves the anti-overflow effect of the adhesive groove 32Aa, to improve stability of the connection between the laminate 31 and the frame 32.

In addition, as shown in FIG. 3, the adhesive groove 32Aa has a sidewall and a bottom wall. The sidewall extends in a direction away from a center of the adhesive groove relative to the bottom wall, that is, the sidewall is arranged obliquely. The sidewall can hinder flow of the connecting adhesive 33 to some extent, which reduces a possibility of overflow of the connecting adhesive 33 from the first portion 32A, and helps improve stability of the connection between the frame 32 and the laminate 31.

In the above structure, as shown in FIG. 3, for the connecting adhesive 33, along the height direction Z of the photovoltaic module 3, a thickness H2 of the connecting adhesive 33 between the laminate 31 and the bottom wall of the adhesive groove 32Aa ranges from 2 mm to 4 mm, which may be, for example, 2 mm, 2.1 mm, 2.2 mm, 2.5 mm, 2.6 mm, 2.8 mm, 3 mm, 3.1 mm, 3.3 mm, 3.5 mm, 3.7 mm, 3.9 mm, or 4 mm, or may be other values in the above range, and is not limited in the present invention.

If H2 is excessively small (e.g., less than 2 mm), when the depth H1 of the adhesive groove 32Aa is fixed, the excessively small H2 is not conducive to the stable connection between the laminate 31 and the frame 32. If H2 is excessively large (e.g., greater than 4 mm), when the depth H1 of the adhesive groove 32Aa is fixed, the excessively large H2 may affect mounting difficulty and mounting efficiency of the frame 32 and the laminate 31, and may also cause a waste of the connecting adhesive 33. Therefore, when H2 ranges from 2 mm to 4 mm, the stable connection between the frame 32 and the laminate 31 can be ensured, and the cost of the photovoltaic module 3 can be appropriately reduced, thereby improving manufacturing efficiency of the photovoltaic module 3.

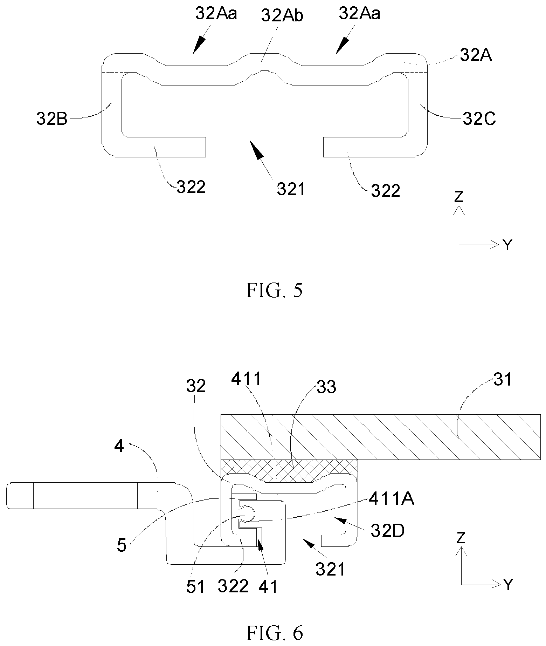

As shown in FIG. 5, in order to adapt to a size of the laminate 31 and ensure stability of bonding between the laminate 31 and the frame 32, two or more adhesive grooves 32Aa may be provided to accommodate a larger amount of the connecting adhesive 33. A width of a connecting rib 32Ab between two adjacent adhesive grooves 32Aa may range from 6 mm to 15 mm to ensure that structural strength of the frame 32 is not affected. For example, the width may be, for example, 6 mm, 7 mm, 8 mm, 9 mm, 10 mm, 11 mm, 12 mm, 13 mm, 14 mm, or 15 mm, or may be other values in the above range, which is not limited in the present invention.

As shown in FIG. 6, in some embodiments, the sidewall of the opening 321 is provided with an extension portion 322, and the connecting member 4 includes an engaging groove 41. The extension portion 322 is configured to extend into the engaging groove 41 and engage with the engaging groove 41.

The extension portion 322 extends along the width direction Y of the photovoltaic module 3 and engages with the engaging groove 41 of the connecting member 4. That is, along the height direction Z of the photovoltaic module 3, the extension portion 322 has one end abutting against a top wall of the engaging groove 41 and another end abutting against a bottom wall of the engaging groove 41. At the same time, along the width direction Y of the photovoltaic module 3, a sidewall of the extension portion 322 may abut against a sidewall of the engaging groove 41. With the cooperation between the engaging groove 41 and the extension portion 322, the connection between the connecting member 4 and the frame 32 is realized. This design improves stability of the connection between the connecting member 4 and the frame 32 and reduces a possibility of detachment from each other, thereby improving stability of the connection between the photovoltaic module 3 and the clamping body 11. At the same time, this design also improves load resistance of the photovoltaic module 3, that is, improves wind-tearing resistance of the photovoltaic module 3, and reduces a possibility of shaking and even deformation of the photovoltaic module 3 under an external force, thereby ensuring normal and stable operation of the photovoltaic module 3. In addition, when the connecting member 4 is connected to the frame 32, the light-facing surface of the laminate 31 may not be blocked, ensuring photoelectric conversion efficiency of the photovoltaic module 3.

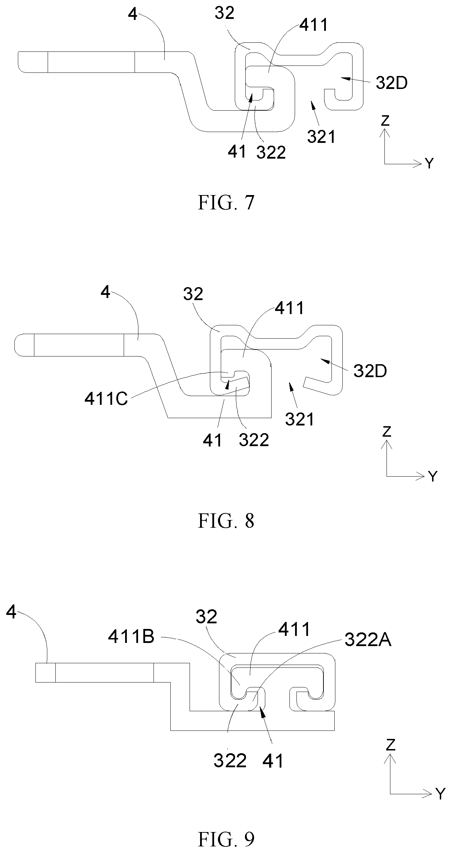

As shown in FIG. 7, in some other embodiments, the extension portion 322 has a bending structure, that is, the extension portion 322 may be "L"-shaped. This design increases an area of abutment between the sidewalls of the extension portion 322 and the engaging groove 41, thereby improving reliability of fitting between the extension portion 322 and the engaging groove 41. Therefore, the two can be stably engaged together, thereby improving stability of mounting of the photovoltaic module 3.

As shown in FIG. 8, in some other embodiments, the extension portion 322 is arranged obliquely towards interior of the frame 32, the top wall of the engaging groove 41 is provided with a first limiting protrusion 411C, and the first limiting protrusion 411C may extend along the height direction Z of the photovoltaic module 3 towards a side close to the bottom wall of the engaging groove 41. Along the width direction Y of the photovoltaic module 3, the first limiting protrusion 411C can abut against the extension portion 322, thereby playing a limiting role. This design reduces a possibility of detachment of the extension portion 322 from the engaging groove 41, that is, reduces a possibility of disconnection of the photovoltaic module 3 from the connecting member 4, thereby improving stability of the connection between the photovoltaic module 3 and the clamp 1.

As shown in FIG. 6 and FIG. 7, in some embodiments, the engaging groove 41 includes a first engaging portion 411, the first engaging portion 411 is located inside the frame 32, and the first engaging portion 411 abuts against a sidewall of the frame 32 along the width direction Y of the photovoltaic module 3. Along the height direction Z of the photovoltaic module 3, the first engaging portion 411 has a first end abutting against a top wall of the frame 32 and a second end abutting against the extension portion 322.

Referring to FIG. 4, the first portion 32A, the second portion 32B, and the third portion 32C of the frame 32 jointly define an accommodating space 32D. The accommodating space 32D is in communication with the outside through the opening 321. The first engaging portion 411 is the top wall of the engaging groove 41, the first engaging portion 411 extends into the accommodating space 32D through the opening 321, and the first engaging portion 411 is engaged between a top wall of the accommodating space 32D and the extension portion 322. For example, the first portion 32A of the frame 32 is recessed in a direction away from the photovoltaic module 3. That is, at least part of the first portion 32A forms a protrusion towards interior of the accommodating space 32D. The protrusion can limit, with the extension portion 322, movement of the first engaging portion 411 along the height direction Z of the photovoltaic facility. At the same time, the first engaging portion 411 may alternatively be pressed against the sidewall of the frame 32 along the width direction Y of the photovoltaic module 3. This design helps limit and fix the connecting member 4, thereby improving reliability of fitting between the extension portion 322 and the engaging groove 41, which reduces a possibility of detachment of the extension portion 322 from the engaging groove 41 and then improves stability of the connection between the connecting member 4 and the frame 32.

For example, along the height direction Z of the photovoltaic module 3, ends of the second portion 32B and the third portion 32C away from the first portion 32A are both provided with the extension portion 322, and the two extension portions 322 extend close to each other. The opening 321 is formed between the two extension portions 322. Along the width direction Y of the photovoltaic module 3, a distance between the two extension portions 322 may be greater than or equal to a size of the first engaging portion 411 to ensure that the first engaging portion 411 can enter the accommodating space 32D from the opening 321 along the height direction Z of the photovoltaic module 3.

As shown in FIG. 6, in some embodiments, a first adhesive jacket 5 sleeves the first engaging portion 411, and the first engaging portion 411 abuts against the frame 32 through the first adhesive jacket 5.

The first adhesive jacket 5 may be a rubber part, a silicone part, or the like. The first adhesive jacket 5 sleeves an outer side of the first engaging portion 411, so that the first engaging portion 411 abuts against the top wall of the frame 32, the sidewall of the frame 32, and the extension portion 322 through the first adhesive jacket 5. The first adhesive jacket 5 may play a cushioning and protection role, reducing a possibility of hard contact of the first engaging portion 411 with the frame 32, thereby reducing a possibility of mutual wear between the first engaging portion 411 and the frame 32 and helping prolong the service life of the connecting member 4 and the frame 32. At the same time, with the first adhesive jacket 5, stability of fitting between the first engaging portion 411 and the frame 32 is improved, a possibility of sliding of the first engaging portion 411 relative to the frame 32 is reduced, and the stability of the connection between the connecting member 4 and the frame 32 is further improved.

As shown in FIG. 6, in some embodiments, the first adhesive jacket 5 is provided with a protruding portion 51, the first engaging portion 411 is provided with a recessed portion 411A, and the protruding portion 51 extends into the recessed portion 411A and engages with the recessed portion 411A.

The protruding portion 51 may protrude along the width direction Y of the photovoltaic module 3, and correspondingly, the recessed portion 411A may be recessed along the width direction Y of the photovoltaic module 3. Shapes of the protruding portion 51 and the recessed portion 411A match each other. For example, the protruding portion 51 may be an arc-shaped protrusion, and the recessed portion 411A may correspondingly be an arc-shaped recess. The protruding portion 51 extends into the recessed portion 411A and engages with the recessed portion 411A, thereby realizing a connection between the first adhesive jacket 5 and the first engaging portion 411. Through the engagement between the protruding portion 51 and the recessed portion 411A, stability of mounting of the first adhesive jacket 5 is improved, thereby reducing a possibility of fall-off of the first adhesive jacket 5 from the first engaging portion 411 and improving stability and reliability of fitting between the first engaging portion 411 and the frame 32.

As shown in FIG. 9, in some embodiments, the engaging groove 41 includes a first engaging portion 411 located inside the frame 32, the first engaging portion 411 has a first hook structure 411B, the extension portion 322 has a second hook structure (322A), and the first hook structure 411B is engaged with the second hook structure 322A.

Both the first hook structure 411B and the second hook structure 322A may be L-shaped structures. Along the height direction Z of the photovoltaic module 3, the first hook structure 411B and the second hook structure 322A are engaged with each other. This design further improves the stability of fitting between the engaging groove 41 and the extension portion 322, thereby improving stability of the connection between the connecting member 4 and the frame 32 and reducing a possibility of relative movement between the connecting member 4 and the frame 32.

As shown in FIG. 9, in some other embodiments, the connecting member 4 is provided with two engaging grooves 41, and the two engaging grooves 41 fit the corresponding extension portions 322 respectively. This design further reduces a possibility of disengagement of the connecting member 4 from the frame 32. The first engaging portions 411 of the two engaging grooves 41 are each provided with the above first hook structure 411B. Correspondingly, the two extension portions 322 are each provided with the above second hook structure 322A. The first hook structure 411B is engaged with the corresponding second hook structure 322A. Through the fitting between the first hook structure 411B and the second hook structure 322A, it is conducive to further improving stability of the connection between the connecting member 4 and the frame 32, thereby helping improve stability of mounting of the photovoltaic module 3.

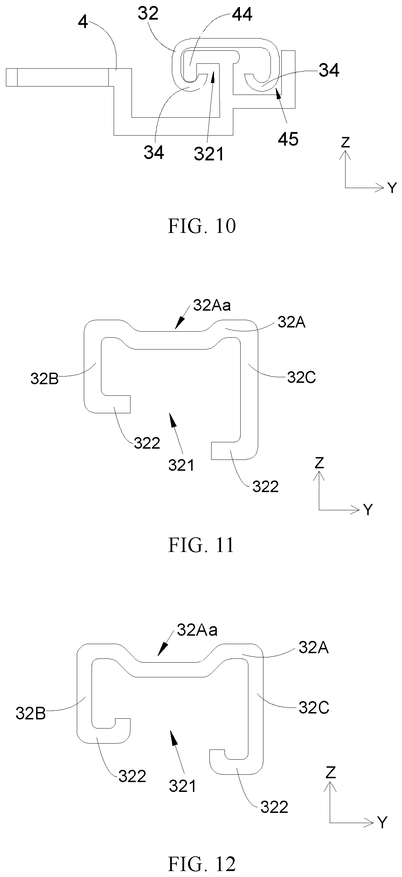

As shown in FIG. 10, in some other embodiments, the sidewall of the opening 321 of the frame 32 is provided with a third hook structure 34, and one end of the connecting member 4 is provided with a fourth hook structure 44. When the connecting member 4 is connected to the frame 32, the fourth hook structure 44 extends into the frame 32 through the opening 321 and engages with the third hook structure 34 along the height direction Z of the photovoltaic module 3, thereby realizing the connection between the connecting member 4 and the frame 32. Through the fitting between the third hook structure 34 and the fourth hook structure 44, stability of the connection between the connecting member 4 and the frame 32 is improved.

As shown in FIG. 10, in some other embodiments, sidewalls on two sides of the opening 321 of the frame 32 are each provided with the third hook structure 34, the connecting member 4 is provided with the fourth hook structure 44, and one side of the fourth hook structure 44 is provided with a receiving groove 45. A sidewall of the receiving groove 45 is connected to the fourth hook structure 44. When the fourth hook structure 44 and the third hook structure 34 on one side of the opening 321 are engaged with each other, the third hook structure 34 on the other side of the opening 321 can extend into the receiving groove 45, and along the height direction Z of the photovoltaic module 3, the third hook structure 34 abuts against a bottom wall of the receiving groove 45. This design further improves the stability of the connection between the connecting member 4 and the frame 32.

As shown in FIG. 11 and FIG. 12, in some embodiments, along the height direction Z of the photovoltaic module 3, a height of the second portion 32B is less than that of the third portion 32C.

Along the width direction Y of the photovoltaic module 3, for example, the second portion 32B is located on a side of the frame 32 close to the clamp 1, and the third portion 32C is located on a side of the frame 32 close to the laminate 31. Referring to FIG. 1, the first engaging portion 411 of the connecting member 4 overlaps and fits the extension portion 322 on the second portion 32B, while the third portion 32C is not substantially connected to the connecting member 4. In this case, the height of the third portion 32C along the height direction Z of the photovoltaic module 3 can be set larger so that the extension portion 322 on the third portion 32C can abut against the color steel tile 2 to prevent suspension in the air, thereby improving stability of the frame 32. Similarly, if the first engaging portion 411 of the connecting member 4 overlaps and fits the extension portion 322 on the third portion 32C, the height of the second portion 32B along the height direction Z of the photovoltaic module 3 can be set larger so that the extension portion 322 on the second portion 32B can abut against the color steel tile 2. A value of a height difference between the second portion 32B and the third portion 32C is equal to a thickness of a body of the connecting member 4 to ensure that part of the frame 32 abuts against the color steel tile 2 without interference.

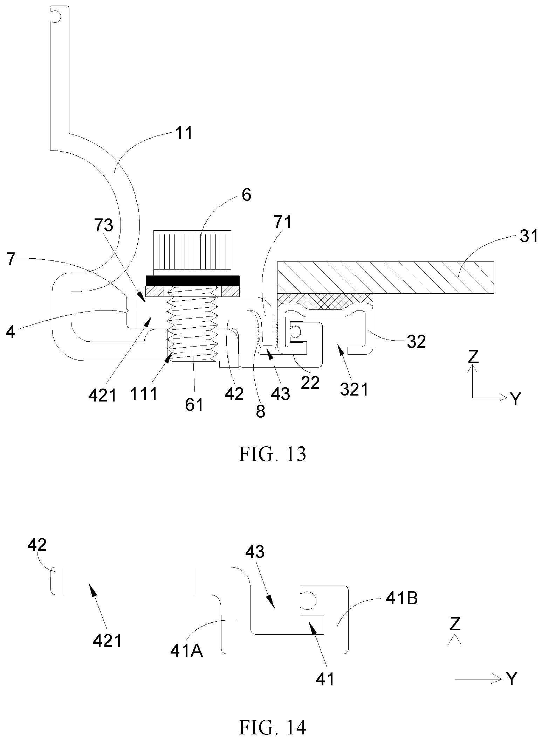

As shown in FIG. 13, in some embodiments, the connecting member 4 is connected to the clamping body 11 through a first fastener 6.

The first fastener 6 may be a bolt. With the first fastener 6, stability of the connection between the connecting member 4 and the clamping body 11 is improved, thereby improving stability of the connection between the photovoltaic module 3 and the clamping body 11. For example, the connecting member 4 includes a first mounting portion 42. The first mounting portion 42 may extend along the width direction Y of the photovoltaic module 3. The first fastener 6 is connected to the first mounting portion 42. For example, when the first mounting portion 42 and the clamping body 11 are connected through the first fastener 6, the first mounting portion 42 may abut against the clamping body 11 along the height direction Z of the photovoltaic module 3.

As shown in FIG. 13, in some embodiments, the clamping body 11 is provided with a first mounting hole 111, and the first fastener 6 is connected to the clamping body 11 through the first mounting hole 111. The connecting member 4 is provided with a second mounting hole 421, and the first fastener 6 is connected to the connecting member 4 through the second mounting hole 421. The second mounting hole 421 is a waist-shaped hole. When the first fastener 6 extends into the second mounting hole 421, the connecting member 4 is movable relative to the first fastener 6.

The clamping body 11 is provided with the first mounting hole 111 along the height direction Z of the photovoltaic module 3, and the first mounting portion 42 of the connecting member 4 is provided with the second mounting hole 421 along the height direction Z of the photovoltaic module 3. The first fastener 6 includes a rod portion 61. The rod portion 61 can extend into the first mounting hole 111 and the second mounting hole 421. The first mounting hole 111 is a round hole, with a size matching that of the rod portion 61, while the second mounting hole 421 is a waist-shaped hole, that is, a dimension of the second mounting hole 421 in the width direction Y of the photovoltaic module 3 is larger than the size of the rod portion 61. Therefore, after the rod portion 61 extends into the second mounting hole 421, the connecting member 4 may move relative to the first fastener 6 along the width direction Y of the photovoltaic module 3.

When the clamping body 11 is connected to the connecting member 4, the first fastener 6 may be first extended into the first mounting hole 111 and the second mounting hole 421, that is, the clamping body 11 and the connecting member 4 are pre-mounted first. Since the second mounting hole 421 is a waist-shaped hole, a mounting position of the connecting member 4 may be adjusted before the first fastener 6 is tightened. Since the connecting member 4 is also connected to the photovoltaic module 3, if the mounting position of the connecting member 4 is adjusted, a mounting position of the photovoltaic module 3 is adjusted. After the photovoltaic module 3 reaches a preset mounting position, the first fastener 6 may be tightened, thereby realizing fixation between the clamping body 11 and the connecting member 4. The above design makes it easy to adjust the position of the photovoltaic module 3 by adjusting the position of the connecting member 4, thereby helping improve accuracy of mounting of the photovoltaic module 3.

In some other embodiments, both the first mounting hole 111 and the second mounting hole 421 are round holes that match the size of the rod portion 61 of the first fastener 6. That is, after the first fastener 6 extends into the first mounting hole 111 and the second mounting hole 421, the connecting member 4 and the clamping body 11 cannot move relative to each other, so as to improve stability and reliability of mounting between the connecting member 4 and the clamping body 11.

As shown in FIG. 13 and FIG. 14, in some embodiments, the connecting member 4 includes a limiting groove 43, the limiting groove 43 extends towards a side close to the color steel tile 2 along the height direction Z of the photovoltaic module 3, and part of the frame 32 is received in the limiting groove 43.

Along the width direction Y of the photovoltaic module 3, two ends of the limiting groove 43 have a first side arm 41A and a second side arm 41B respectively. The second side arm 41B can extend into the frame 32 through the opening 321, that is, part of the frame 32 is received in the limiting groove 43, and the second side arm 41B is in abutment fit with the sidewall of the opening 321, thereby realizing the connection between the connecting member 4 and the frame 32. The first side arm 41A can limit the frame 32, which further reduces a possibility of sliding and deviation of the frame 32 in the width direction Y of the photovoltaic module 3, thereby improving stability of the connection between the connecting member 4 and the frame 32.

As shown in FIG. 13 and FIG. 14, in some other embodiments, the second side arm 41B of the limiting groove 43 is provided with the engaging groove 41, the sidewall of the opening 321 is provided with the extension portion 322 extending along the width direction Y of the photovoltaic module 3, and the extension portion 322 extends into the engaging groove 41 and engages with the engaging groove 41. This design further improves the stability of the connection between the connecting member 4 and the frame 32 and reduces a possibility of detachment from each other.

As shown in FIG. 13 and FIG. 14, in some embodiments, the photovoltaic facility further includes a limiting member 7, and the limiting member 7 is located on a side of the connecting member 4 away from the clamping body 11 and connected to the connecting member 4. The limiting member 7 includes a limiting portion 71 capable of extending into the limiting groove 43, and along the width direction Y of the photovoltaic module 3, the limiting portion 71 has one end abutting against a sidewall of the limiting groove 43 and the other end abutting against the frame 32.

After the frame 32 extends into the limiting groove 43, a space between the first side arm 41A of the limiting groove 43 and the frame 32 is a mounting space of the limiting portion 71. The limiting portion 71 has one end abutting against the first side arm 41A of the limiting groove 43 and the other end abutting against the sidewall of the frame 32, so that certain friction is generated between the limiting portion 71 and the first side arm 41A of the limiting groove 43 and between the limiting portion 71 and the frame 32, thereby enabling the limiting portion 71 to prevent slipping of and limit the frame 32, which reduces a possibility of sliding of the photovoltaic module 3 along its length direction X, to prevent sliding of the photovoltaic module 3 relative to the clamp 1 on the roof, thereby improving stability of mounting of the photovoltaic module 3.

As shown in FIG. 13, in some other embodiments, along the height direction Z of the photovoltaic module 3, a cross-sectional area of the limiting portion 71 gradually decreases in a direction towards a bottom wall of the limiting groove 43. Along the width direction Y of the photovoltaic module 3, the limiting portion 71 has a larger size at the top and a smaller size at the bottom. That is, a cross-sectional shape of the limiting portion 71 is approximately a trapezoid. As can be seen from the above, the limiting portion 71 extends into a mounting space between the frame 32 and the first side arm 41A of the limiting groove 43. Since the limiting portion 71 has a shape that is wide at the top and narrow at the bottom, this design can guide the mounting of the limiting portion 71, thereby improving mounting efficiency of the limiting portion 71.

As shown in FIG. 13, in some embodiments, a second adhesive jacket 8 sleeves the limiting portion 71, and the limiting portion 71 abuts against the sidewall of the limiting groove 43 and the frame 32 through the second adhesive jacket 8.

The second adhesive jacket 8 may be a rubber part or a silicone part. The second adhesive jacket 8 sleeves an outer side of the limiting portion 71 and abuts against the first side arm 41A of the limiting groove 43 and the frame 32. The second adhesive jacket 8 can play a cushioning and protection role, reducing a possibility of hard contact of the limiting portion 71 with the first side arm 41A of the limiting groove 43 and the sidewall of the frame 32, thereby reducing a possibility of mutual wear among the limiting portion 71, the first side arm 41A of the limiting groove 43, and the sidewall of the frame 32, and also reducing a possibility of scratching of the first side arm 41A of the limiting groove 43 and the sidewall of the frame 32 during the mounting of the limiting portion 71. On the other hand, the limiting member 7 may be a metal member. When the limiting portion 71 is directly mounted into the limiting groove 43, there is a higher requirement on dimensional accuracy of a mounting space thereof, that is, there is a higher requirement on dimensional accuracy of the limiting groove 43 and the frame 32. If the mounting space provided for the limiting portion 71 has a larger size, the limiting portion 71 easily slides in the mounting space, thereby reducing slipping prevention and limiting effects of the limiting portion 71 on the frame 32. On the contrary, if the mounting space provided for the limiting portion 71 has a smaller size, the limiting portion 71 cannot extend therein. That is, the limiting member 7 cannot fit the connecting member 4 and the frame 32. When the second adhesive jacket 8 sleeves the limiting portion 71, the requirement of the limiting portion 71 on dimensional accuracy of the mounting space thereof is reduced, thereby ensuring successful mounting of the limiting portion 71 and also ensuring the slipping prevention and limiting effects of the limiting portion 71.

As shown in FIG. 13, in some other embodiments, along the width direction Y of the photovoltaic module 3, two ends of the second adhesive jacket 8 are provided with continuous convex structures. This design increases friction between the second adhesive jacket 8 and the first side arm 41A of the limiting groove 43 and between the second adhesive jacket 8 and the frame 32, that is, improves the slipping prevention and limiting effects of the limiting portion 71, thereby improving stability of mounting of the photovoltaic module 3 and reducing a possibility of sliding of the photovoltaic module 3.

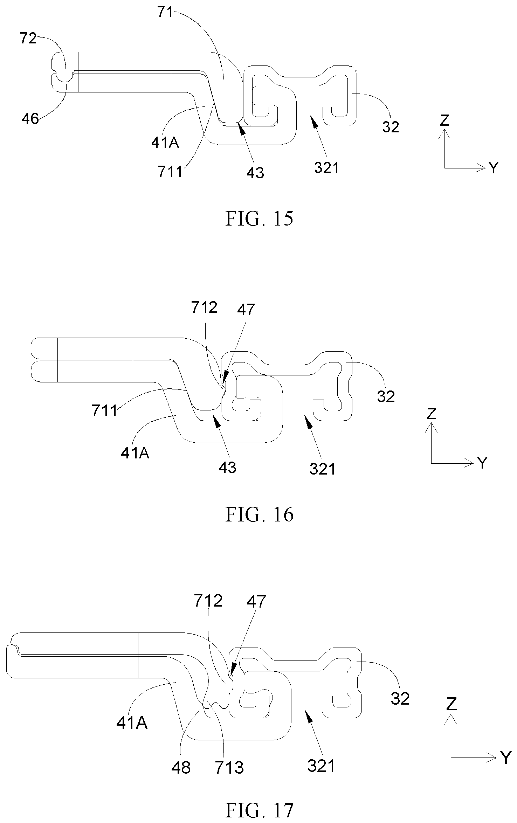

As shown in FIG. 15, in some embodiments, the sidewall of the limiting groove 43 is arranged obliquely towards a side away from the frame 32, and the limiting portion 71 includes an inclined guide surface 711. The guide surface 711 is configured to fit the sidewall of the limiting groove 43.

As can be seen from the above, after the frame 32 extends into the limiting groove 43, a space left between the sidewall of the frame 32 and the first side arm 41A of the limiting groove 43 is the mounting space of the limiting portion 71. When the first side arm 41A of the limiting groove 43 is arranged obliquely, a dimension of the mounting space in the width direction Y of the photovoltaic module 3 gradually decreases towards a side close to the bottom wall of the limiting groove 43. Due to a large size at an opening of the mounting space, the mounting of the limiting portion 71 can be guided, which improves mounting efficiency of the limiting portion 71. After the limiting portion 71 extends into the mounting space, since a width of the mounting space continues to decrease, the limiting portion 71 can be engaged between the first side arm 41A of the limiting groove 43 and the frame 32. The limiting portion 71 is provided with the guide surface 711 arranged corresponding to the first side arm 41A, that is, a dimension of the limiting portion 71 in the width direction Y of the photovoltaic module 3 also gradually decreases towards the side close to the bottom wall of the limiting groove 43, so that a shape of the limiting portion 71 corresponds to that of the mounting space, so as to achieve abutment fit between the limiting portion 71 and the first side arm 41A of the limiting groove 43 and between the limiting portion 71 and the frame 32. The above design enables the limiting member 7 to reliably abut against and fit the first side arm 41A of the limiting groove 43 and the frame 32, which reduces a possibility of an influence on the slipping prevention effect due to shaking of the limiting portion 71 in the mounting space and also improves mounting efficiency of the limiting portion 71.

In this embodiment, the guide surface 711 may also guide the mounting of the limiting portion 71. That is, the limiting portion 71 may extend into the mounting space along the first side arm 41A, to further improve the mounting efficiency of the limiting portion 71.

As shown in FIG. 16, in some other embodiments, the limiting portion 71 is provided with a first convex portion 712 extending along the width direction Y of the photovoltaic module 3, and the sidewall of the frame 32 is provided with a recess 47 along the width direction Y of the photovoltaic module 3. The first convex portion 712 can extend into the recess 47 and engage with the recess 47. After the first convex portion 712 extends into the recess 47, along the height direction Z of the photovoltaic module 3, a bottom wall of the first convex portion 712 can abut against a bottom wall of the recess 47. This design helps further improve stability of fitting between the limiting portion 71 and the frame 32, so that the limiting portion 71 can provide reliable friction for the frame 32, thereby reducing a possibility of sliding of the frame 32 in the limiting groove 43. At the same time, through the engagement between the first convex portion 712 and the recess 47, the limiting portion 71 can also be limited, which reduces a possibility of detachment of the limiting member 7 from the limiting groove 43 due to up-and-down shaking and further improves stability of mounting of the limiting portion 71 in the limiting groove 43.

As shown in FIG. 17, in some other embodiments, the limiting portion 71 has a special-shaped structure. The limiting portion 71 is provided with a first convex portion 712 extending along the width direction Y of the photovoltaic module 3, and the sidewall of the frame 32 is provided with a recess 47 along the width direction Y of the photovoltaic module 3. The first convex portion 712 can extend into the recess 47 and engage with the recess 47. A side of the limiting portion 71 away from the first convex portion 712 is provided with a second convex portion 713, the first side arm 41A of the limiting groove 43 is provided with a third convex portion 48, and the second convex portion 713 abuts against the third convex portion 48.

As shown in FIG. 13, in some embodiments, the limiting member 7 is connected to the connecting member 4 through the first fastener 6.

The limiting member 7 is provided with a third mounting hole 73 along the height direction Z of the photovoltaic module 3, and the rod portion 61 of the first fastener 6 extends into the third mounting hole 73, the second mounting hole 421, and the first mounting hole 111 to realize a connection among the limiting member 7, the connecting member 4, and the clamping body 11. Both the second mounting hole 421 and the third mounting hole 73 may be waist-shaped holes, and the second mounting hole 421 and the third mounting hole 73 have a same size. Therefore, after the rod portion 61 extends into the third mounting hole 73, the limiting member 7 may also move relative to the first fastener 6 along the width direction Y of the photovoltaic module 3. By designing the third mounting hole 73 of the limiting member 7 also as a waist-shaped hole, the limiting member 7 can also move together with the connecting member 4, which further facilitates adjustment of the mounting position of the photovoltaic module 3, so as to improve accuracy of mounting of the photovoltaic module 3.

In some other embodiments, the first mounting hole 111, the second mounting hole 421, and the third mounting hole 73 are all round holes that match the size of the rod portion 61 of the first fastener 6. That is, after the first fastener 6 extends into the first mounting hole 111, the second mounting hole 421, and the third mounting hole 73, the connecting member 4, the limiting member 7, and the clamping body 11 cannot move relative to one another, so as to improve stability and reliability of mounting between the three.

As shown in FIG. 15, in some other embodiments, one of the connecting member 4 and the limiting member 7 is provided with a first positioning protrusion 72, and the other is provided with a first positioning groove 46. Both the first positioning protrusion 72 and the first positioning groove 46 may extend along the height direction Z of the photovoltaic module 3. When the connecting member 4 is connected to the limiting member 7, the first positioning protrusion 72 can be extended into the first positioning groove 46, so as to determine relative positions of the connecting member 4 and the limiting member 7, thereby facilitating the first fastener 6 to extend into the second mounting hole 421 and the third mounting hole 73 to connect the connecting member 4 and the limiting member 7. On the other hand, when the first positioning protrusion 72 engages with the first positioning groove 46, a possibility of relative movement between the limiting member 7 and the connecting member 4 is also reduced, and stability of the connection between the limiting member 7 and the connecting member 4 is further improved.

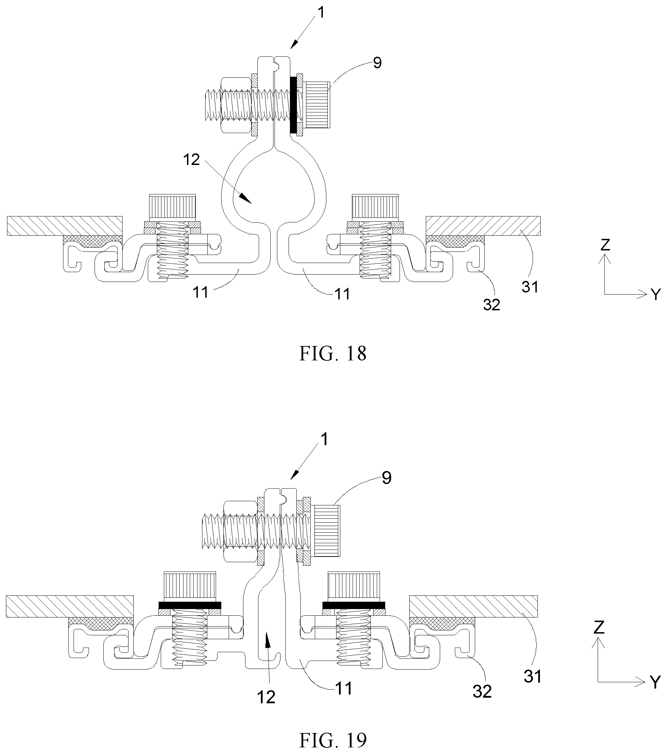

As shown in FIG. 1 and FIG. 18, in some embodiments, the clamp includes two symmetrically arranged clamping bodies 11, and the two clamping bodies 11 are connected through a second fastener 9. A clamping space 12 is provided between the two clamping bodies 11, and part of the color steel tile 2 can extend into the clamping space 12.

When two adjacent color steel tiles 2 are connected to each other, the male rib 22 of one color steel tile 2 can be connected to the female rib 23 of the other color steel tile 2 to form a locking structure 21. The locking structure 21 may extend into the clamping space 12. That is, the clamp 1 may clamp the locking structure 21 of the color steel tiles 2. A cross-sectional shape of the clamping space 12 can match a shape of the locking structure 21. For example, a sidewall of the clamping space 12 may have an outwardly protruding arc-shaped structure. This design enables the clamping body 11 to clamp the arc-shaped locking structure 21 (or other locking structure) more stably and firmly. The second fastener 9 may be a bolt. When the locking structure 21 extends into the clamping space 12, the second fastener 9 can be tightened to enable the clamp 1 to clamp the locking structure 21.

As shown in FIG. 19, in some other embodiments, the clamping space 12 may also have an upright sidewall extending along the height direction Z of the photovoltaic module 3 to match the vertical locking structure 21 (a 360° upright locking structure).

In some other embodiments, the color steel tile 2 is further provided with a raised folding portion (not shown), and the clamp 1 may be clamped on the folding portion.

A mounting method for a photovoltaic facility provided in some embodiments of the present invention is as follows. The clamp 1 clamps the color steel tiles 2. For example, the two clamping bodies 11 of the clamp 1 may be respectively located on two sides of the locking structure 21 of the color steel tiles 2. That is, the locking structure 21 extends into the clamping space 12, and then the second fastener 9 is tightened to cause the clamp 1 to tighten the locking structure 21. The connecting member 4 is connected to the photovoltaic module 3, the frame 32 of the photovoltaic module 3 is provided with an opening 321, and the connecting member 4 extends into the opening 321 and abuts against a sidewall of the opening 321. The connecting member 4 is connected to the clamping body 11 through the first fastener 6 to realize a connection between the photovoltaic module 3 and the color steel tile 2.

The present invention further provides another photovoltaic facility, including a clamp 1, a color steel tile 2, and a photovoltaic module 3. The clamp 1 is connected to the color steel tile 2. The clamp 1 includes a clamping body 11. The photovoltaic module 3 is located on one side of the clamping body 11. Along a height direction of the photovoltaic module 3, the clamping body 11 clamps at least part of the photovoltaic module 3. With respect to the structure of the photovoltaic facility above, the present invention provides two specific embodiments.

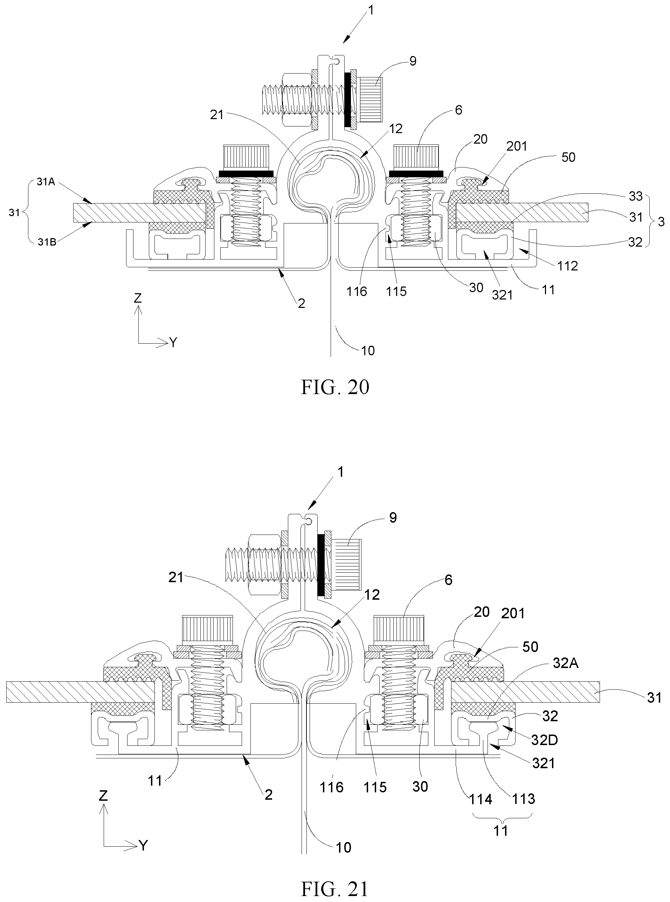

As shown in FIG. 20, in the first embodiment, the photovoltaic facility includes a clamp 1, a color steel tile 2, a photovoltaic module 3, and a pressing block 20. The clamp 1 is connected to the color steel tile 2. The clamp 1 includes a clamping body 11. The photovoltaic module 3 includes a laminate 31 and a frame 32. The frame 32 is connected to a back side of the laminate 31. The pressing block 20 has a first end connected to the clamping body 11 and a second end connected to the photovoltaic module 3. Along a height direction Z of the photovoltaic module 3, the laminate 31 abuts against the pressing block 20, and the frame 32 abuts against the clamping body 11.

The clamp 1 clamps the color steel tiles 2. Along the height direction Z of the photovoltaic module 3, the photovoltaic module 3 is located between the pressing block 20 and the clamping body 11. The pressing block 20 can press the photovoltaic module 3 onto the clamping body 11 to realize a connection between the photovoltaic module 3 and the color steel tile 2. The photovoltaic module 3 includes a laminate 31 and a frame 32. The laminate 31 has a first surface 31A and a second surface 31B arranged opposite to each other along the height direction Z of the photovoltaic module 3. The first surface 31A is a side that receives the sunlight, and the second surface 31B is a side that faces away from the sunlight. The frame 32 is connected to the second surface 31B. When the photovoltaic module 3 is pressed, the pressing block 20 abuts against the first surface 31A of the laminate 31, and a bottom wall of the frame 32 abuts against the clamping body 11. That is, the pressing block 20 and the clamping body 11 simultaneously clamp the laminate 31 and the frame 32 along the height direction Z of the photovoltaic module.

In this embodiment, specific structures of the color steel tile 2, the laminate 31, and the frame 32 may be the same as the structures of the color steel tile 2, the laminate 31, and the frame 32 in the first photovoltaic facility above, and also have the same technical effect. Details are not described herein again. In addition, in this embodiment, the pressing block 20 is arranged to realize a connection between the photovoltaic module 3 and the clamping body 11, which improves stability and reliability of the connection between the photovoltaic module 3 and the clamp 1, reduces a possibility of sliding or detachment of the photovoltaic module 3 from the clamp 1 under an external force, and further improves wind resistance of the photovoltaic module 3, thereby helping realize overall normal and stable operation of the photovoltaic facility.

Alternatively, the cross section of the frame 32 may have a closed rectangle-shaped structure. Alternatively, the opening 321 of the frame 32 may be provided in the bottom wall of the frame 32 or provided in the sidewall of the frame 32. This design helps reduce a weight of the frame 32, thereby reducing an overall weight of the photovoltaic module 3 and meeting a load-bearing requirement of a building, to realize a stable connection between the entire photovoltaic facility and the building.

As shown in FIG. 20, in some embodiments, the clamping body 11 includes a first bearing groove 112, and the first bearing groove 112 extends towards the color steel tile 2 along the height direction Z of the photovoltaic module 3. The frame 32 is received in the first bearing groove 112 and abuts against a bottom wall of the first bearing groove 112 along the height direction Z of the photovoltaic module 3.

The frame 32 may be partially received in the first bearing groove 112 or wholly received in the first bearing groove 112. Under an action of the pressing block 20, the bottom wall of the frame 32 is pressed against the bottom wall of the first bearing groove 112, and the bottom wall of the first bearing groove 112 may also be pressed against the color steel tile 2. Along the width direction Y of the photovoltaic module 3, a sidewall of the first bearing groove 112 may abut against the sidewall of the frame 32 to further limit the photovoltaic module 3. Through the arrangement of the first bearing groove 112, it is conducive to limiting the position of the photovoltaic module 3, which reduces a possibility of fall-off of the photovoltaic module 3 from between the pressing block 20 and the clamping body 11 due to sliding, thereby improving stability and reliability of the connection between the photovoltaic module 3 and the clamping body 11.

In some embodiments, the bottom wall of the first bearing groove 112 is provided with a first gasket (not shown), and the first gasket abuts against the frame 32.

The first gasket may be a rubber part. The frame 32 is connected to the bottom wall of the first bearing groove 112 through the first gasket. For example, the first gasket may be provided with a concave-convex structure to increase friction between the frame 32 and the bottom wall of the first bearing groove 112. The first gasket can cushion and protect the frame 32, which reduces a possibility of hard contact of the clamping body 11 with the frame 32, thereby reducing a possibility of scratching and wear of the frame 32 during the mounting of the photovoltaic module 3 and prolonging the service life of the photovoltaic module 3. At the same time, under an action of the first gasket, it improves stability and reliability of the connection between the photovoltaic module 3 and the clamping body 11.

As shown in FIG. 20, in some embodiments, the pressing block 20 directly presses the photovoltaic module 3 onto the clamping body 11. That is, the bottom wall of the frame 32 directly abuts against the clamping body 11. The clamping body 11 may be provided with a first bearing groove 112, and the bottom of the frame 32 may be directly pressed against a bottom wall of the first bearing groove 112.

As shown in FIG. 21, in some embodiments, the frame 32 is provided with an opening 321, and the clamping body 11 is provided with a first pressing portion 113. The first pressing portion 113 can extend into the frame 32 through the opening 321, and abut against the top wall of the frame 32 along the height direction Z of the photovoltaic module 3.

The opening 321 may be provided in the bottom wall of the frame 32, the clamping body 11 includes a body portion 114 and a first pressing portion 113, the first pressing portion 113 is located on one side of the body portion 114 and is connected to the body portion 114, the first pressing portion 113 extends along the height direction Z of the photovoltaic module 3, and the first pressing portion 113 extends into the accommodating space 32D of the frame 32 through the opening 321 and abuts against an inner surface of the first portion 32A. When the first portion 32A abuts against the first pressing portion 113, the bottom of the frame 32 may abut against the body portion 114. Through the arrangement of the opening 321, the clamping body 11 can extend into the accommodating space 32D of the frame 32 to fit the frame 32. This design can further limit the photovoltaic module 3, reduce a possibility of fall-off of the photovoltaic module 3 from the clamping body 11, and further improve stability of the connection between the photovoltaic module 3 and the clamping body 11, thereby improving stability of fitting between the pressing block 20 and the photovoltaic module 3.

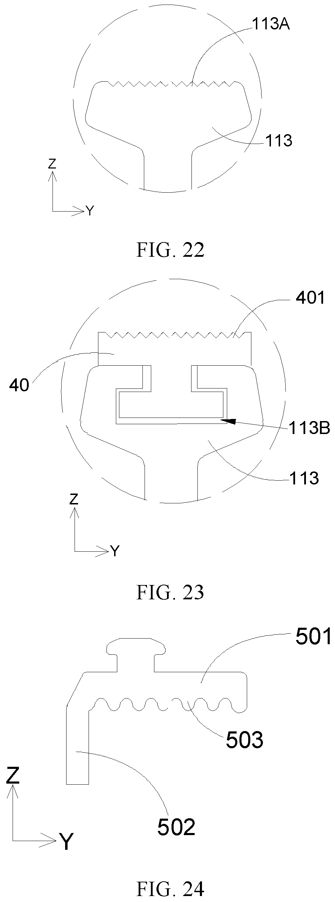

As shown in FIG. 22, in some embodiments, the first pressing portion 113 is provided with continuous first protrusions 113A, and the first protrusions 113A abut against the first portion 32A of the frame 32.

The top of the first pressing portion 113 is provided with a plurality of first protrusions 113A, so that the first pressing portion 113 has a zigzag structure. Such arrangement increases friction between the first pressing portion 113 and the first portion 32A of the frame 32, and reduces a possibility of relative sliding between the first pressing portion 113 and the frame 32, thereby improving stability of fitting between the first pressing portion 113 and the frame 32, to improve stability and reliability of mounting of the photovoltaic module 3.

As shown in FIG. 23, in some embodiments, the first pressing portion 113 is provided with a second gasket 40, and the first pressing portion 113 abuts against the first portion 32A of the frame 32 through the second gasket 40.

The second gasket 40 may also be a rubber part. The second gasket 40 may be bonded to the top of the first pressing portion 113, or the top of the first pressing portion 113 is provided with a first mounting groove 113B, and part of the second gasket 40 may be clamped in the first mounting groove 113B. For example, the second gasket 40 is provided with a continuous second protrusion 401, and the second protrusion 401 abuts against the first portion 32A of the frame 32 to increase friction between the second gasket 40 and the frame 32. The second gasket 40 can play a cushioning and protection role, which reduces a possibility of hard contact of the first pressing portion 113 with the frame 32, thereby reducing a possibility of scratching or wear of the frame 32 and prolonging the service life of the photovoltaic module 3, and further improving stability of fitting between the frame 32 and the first pressing portion 113.

As shown in FIG. 22, in some embodiments, the pressing block 20 is provided with a third gasket 50, and the pressing block 20 abuts against the laminate 31 through the third gasket 50.

The third gasket 50 may also be a rubber part. A lower surface of the pressing block 20 is provided with a second mounting groove 201, and part of the third gasket 50 can be clamped in the second mounting groove 201 to realize a connection between the third gasket 50 and the pressing block 20. The pressing block 20 abuts against the laminate 31 through the third gasket 50, which reduces a possibility of hard contact of the pressing block 20 with the laminate 31, thereby reducing a possibility of damages to a surface of the laminate 31 during the mounting of the photovoltaic module 3, prolongs the service life of the laminate 31, and improves operational stability of the laminate 31. On the other hand, the arrangement of the third gasket 50 also helps increase friction between the pressing block 20 and the laminate 31, reduces a possibility of sliding of the photovoltaic module 3 relative to the pressing block 20, and improves stability of fitting between the pressing block 20 and the photovoltaic module 3, thereby improving wind-tearing resistance of the photovoltaic module 3.

As shown in FIG. 21 and FIG. 24, in some embodiments, the third gasket 50 includes a first main body portion 501 and a second main body portion 502 connected to each other. The first main body portion 501 is located on a side of the laminate 31 along the height direction Z of the photovoltaic module 3 and abuts against the laminate 31. The second main body portion 502 is located on a side of the laminate 31 along the width direction Y of the photovoltaic module 3 and abuts against the laminate 31.

The third gasket 50 may have an L-shaped structure. The first main body portion 501 extends along the width direction Y of the photovoltaic module 3, the second main body portion 502 extends along the height direction Z of the photovoltaic module 3, and the first main body portion 501 and the second main body portion 502 may each be provided with continuous third protrusions 503 to increase friction between the third gasket 50 and the laminate 31. The above design enables an upper surface and an inner side surface of the laminate 31 to be protected by the third gasket 50, and further reduces a possibility of damages to the laminate 31, thereby prolonging the service life of the entire photovoltaic module 3. The second main body portion 502 may extend towards a side close to the clamping body 11 until abutment against the clamping body 11, so that the third gasket 50 can abut against the sidewall of the frame 32, thereby protecting the frame 32.

As shown in FIG. 21, in some embodiments, the pressing block 20 is connected to the clamping body 11 through the first fastener 6.

For example, the first fastener 6 may be a bolt. The pressing block 20 and the clamping body 11 are both provided with mounting holes corresponding to the first fastener 6. The first fastener 6 can pass through the mounting holes to connect the pressing block 20 and the clamping body 11 together. The clamping body 11 is provided with a mounting cavity 115. The mounting cavity 115 is in communication with the mounting hole in the clamping body 11. A mounting block 30 is arranged in the mounting cavity 115. A threaded hole is provided in the mounting block 30. One end of the first fastener 6 can extend into the mounting block 30 through the mounting cavity 115 and fit the above threaded hole. A sidewall of the mounting cavity 115 is provided with a second limiting protrusion 116. The second limiting protrusion 116 can abut against the mounting block 30, to limit a position of the mounting block 30, thereby facilitating fitting between the first fastener 6 and the mounting block 30. For example, during the tightening of the first fastener 6, the second limiting protrusion 116 can limit rotation of the mounting block 30 by abutting against the mounting block 30, which reduces a possibility of rotation of the mounting block 30 together with the first fastener 6 after the connection with the first fastener 6, thereby realizing fitting between the first fastener 6 and the mounting block 30. The above connection manner helps improve stability of a connection between the pressing block 20 and the clamping body 11 and enables the pressing block 20 to provide a reliable pressing effect for the photovoltaic module 3, thereby improving stability of mounting of the photovoltaic module 3 and helping improve wind resistance of the photovoltaic module 3.

In the photovoltaic facility provided in this embodiment, the clamp 1 includes two symmetrically arranged clamping bodies 11, and the two clamping bodies 11 are connected through a second fastener 9. A clamping space 12 is provided between the two clamping bodies 11, and the locking structure 21 of the color steel tile 2 can extend into the clamping space 12. A cross-sectional shape of the clamping space 12 can match a shape of the locking structure 21, and a sidewall of the clamping space 12 may have an outwardly protruding arc-shaped structure, which can clamp the arc-shaped locking structure 21 more stably and firmly. Alternatively, the clamping space 12 may also have an upright sidewall extending along the height direction Z of the photovoltaic module 3 to match the 360° upright locking structure 21. In addition, the color steel tile 2 is further provided with a raised folding portion (not shown), and the clamp 1 may alternatively be clamped on the folding portion.

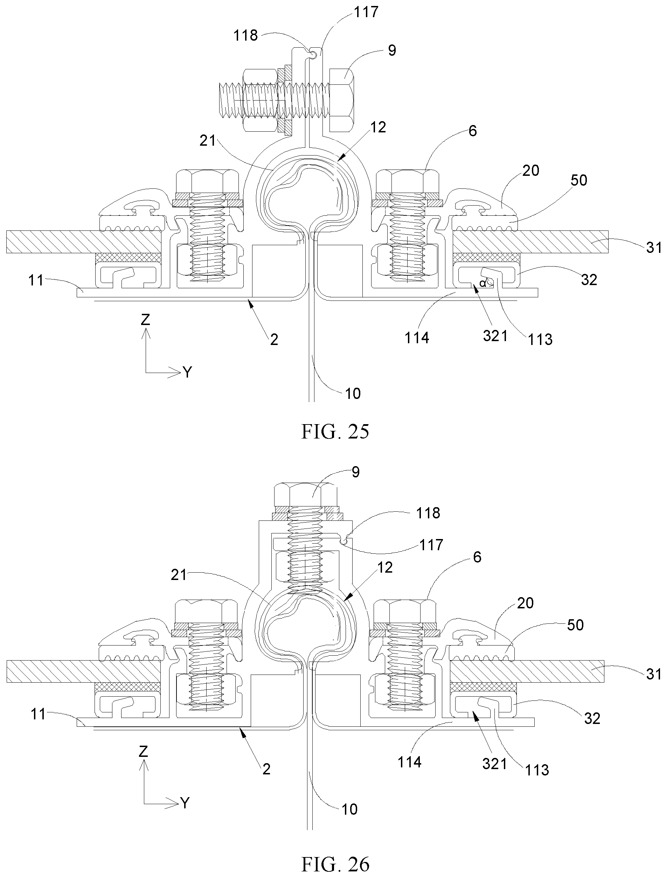

As shown in FIG. 25 and FIG. 26, in some other embodiments, the first pressing portion 113 may have a bending structure similar to an "L" shape. For example, a bending angle α may be 90°, or the bending angle α may be greater than 90°, such as 100°, 105°, or 110°. The top of the first pressing portion 113 can abut against the frame 32. That is, under a pressing effect of the pressing block 20, the photovoltaic module 3 can be pressed on the first pressing portion 113 to realize the connection between the photovoltaic module 3 and the color steel tile 2. Along the height direction Z of the photovoltaic module 3, the bottom wall of the frame 32 may alternatively abut against the body portion 114 of the clamping body 11 to further improve stability of the connection between the photovoltaic module 3 and the clamping body 11.

Among the two clamping bodies 11, one is provided with a positioning portion 118 and the other is provided with a positioning fitting portion 117. The positioning portion 118 can extend into the positioning fitting portion 117 to realize mutual positioning of the two clamping bodies 11. This design improves accuracy of the connection of the two clamping bodies 11 to improve overall assembly efficiency of the clamp 1, and also improves stability and reliability of the connection of the two clamping bodies 11. A shape of the positioning portion 118 matches that of the positioning fitting portion 117. For example, the positioning portion 118 may be an arc-shaped protrusion, and the positioning fitting portion 117 may be an arc-shaped recess. Certainly, the positioning portion 118 and the positioning fitting portion 117 may alternatively be in other shapes. As shown in FIG. 25, both the positioning portion 118 and the positioning fitting portion 117 may fit along the width direction Y of the photovoltaic module 3, or as shown in FIG. 26, the positioning portion 118 and the positioning fitting portion 117 may fit along the height direction Z of the photovoltaic module 3.

A specific mounting method for a photovoltaic facility provided in this embodiment is as follows.

Firstly, the clamp 1 clamps the color steel tiles 2. The two clamping bodies 11 of the clamp 1 may be located on two sides of the locking structure 21 of the color steel tiles 2 respectively. That is, the locking structure 21 extends into the clamping space 12. Then, the second fastener 9 is tightened to cause the clamp 1 to clamp the locking structure 21. The photovoltaic module 3 is placed on the clamping body 11, and the frame 32 of the photovoltaic module 3 abuts against the clamping body 11. Then, the pressing block 20 is pressed onto the photovoltaic module 3, that is, the pressing block 20 abuts against the laminate 31, and the pressing block 20 is connected to the clamping body 11 through the first fastener 6, so that the photovoltaic module 3 is fixed onto the clamping body 11 through the pressing block 20, thereby realizing the connection between the photovoltaic module 3 and the color steel tile 2.

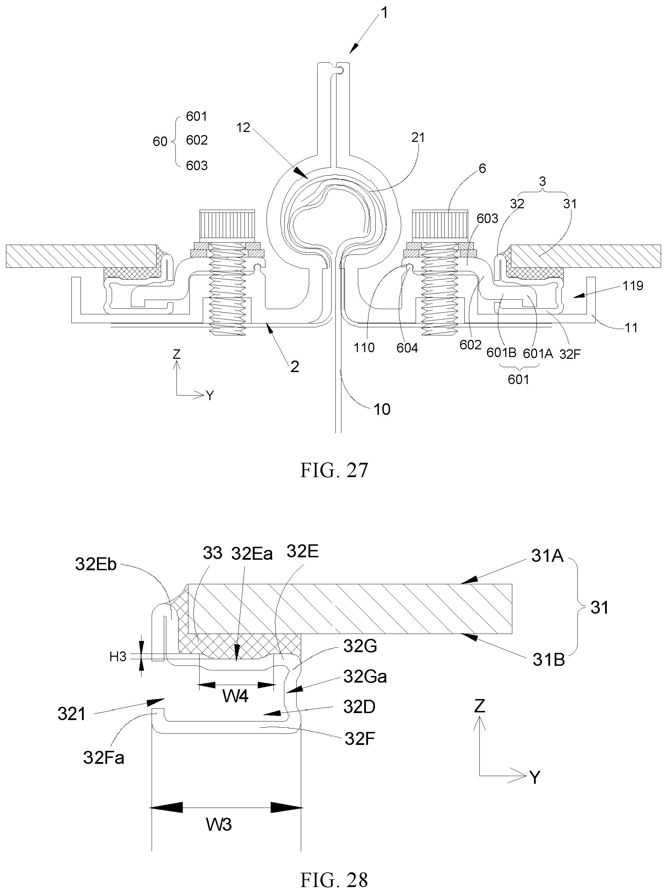

As shown in FIG. 27 and FIG. 28, in a second embodiment, the photovoltaic facility includes a clamp 1, a color steel tile 2, a photovoltaic module 3, and a connection pressing member 60. The clamp 1 is connected to the color steel tile 2. The clamp 1 includes a clamping body 11. The photovoltaic module 3 includes a laminate 31 and a frame 32. The frame 32 is connected to a back side of the laminate 31. The frame 32 is provided with an opening 321 provided along a width direction Y of the photovoltaic module 3. The connection pressing member 60 has one end connected to the clamping body 11 and the other end extending into the opening 321 and abutting against a bottom wall of the frame 32 along a height direction Z of the photovoltaic module 3, so that the frame 32 abuts against the clamping body 11.

In this embodiment, a specific structure of the color steel tile 2 may be the same as the structure of the color steel tile 2 above, and also have the same technical effect. Details are not described herein again. The clamp 1 is clamped on the color steel tile 2. The photovoltaic module 3 includes a laminate 31 and a frame 32. The connection pressing member 60 has one end connected to the clamping body 11 and the other end connected to the frame 32. The laminate 31 has a first surface 31A and a second surface 31B arranged opposite to each other along the height direction Z of the photovoltaic module 3. The first surface 31A is a side that receives the sunlight, and the second surface 31B is a side that faces away from the sunlight. The frame 32 is connected to the second surface 31B. For example, a sidewall of the frame 32 is provided with the opening 321 along the width direction Y of the photovoltaic module 3. That is, the entire frame 32 has a "C"-shaped structure. One end of the connection pressing member 60 can extend into the frame 32 through the opening 321, and the part can abut against the bottom wall of the frame 32 along the height direction Z of the photovoltaic module 3. That is, the connection pressing member 60 and the clamping body 11 clamp at least part of the frame 32 along the height direction Z of the photovoltaic module 3. Under an action of the connection pressing member 60, the frame 32 is pressed onto the clamping body 11, so that the photovoltaic module 3 abuts against the clamping body 11, thereby realizing the connection between the photovoltaic module 3 and the color steel tile 2.

The photovoltaic facility has high stability and excellent wind resistance. For example, the photovoltaic module 3 is provided with the frame 32. The frame 32 reduces a possibility of damages to the laminate 31 by an external force during transportation, mounting, and use, and improves stability of an overall structure of the photovoltaic module 3, thereby prolonging the service life of the photovoltaic module 3 and improving operational stability of the photovoltaic module 3. At the same time, the frame 32 is arranged on a back side of the laminate 31, which reduces a possibility of the frame 32 blocking a light-facing surface of the laminate 31, that is, reduces a light-shielding area, thereby improving efficiency of the photovoltaic module 3 and improving reliability of the entire photovoltaic facility. The above photovoltaic module 3 is connected to the color steel tile 2 through the clamp 1, which improves stability of mounting of the photovoltaic module 3 on the color steel tile 2 and load resistance of the photovoltaic module 3, that is, improves wind resistance of the photovoltaic module 3. In addition, the connection between the photovoltaic module 3 and the clamping body 11 is realized through the connection pressing member 60, which improves stability and reliability of the connection between the photovoltaic module 3 and the clamp 1. Moreover, under an action of the connection pressing member 60, a possibility of sliding or detachment of the photovoltaic module 3 from the clamp 1 under an external force is reduced, and wind resistance of the photovoltaic module 3 is further improved, thereby realizing overall normal and stable operation of the photovoltaic facility.

The structure of the frame 32 in this embodiment is introduced below.

As shown in FIG. 28, the frame 32 includes a first section 32E, a second section 32F, and a third section 32G. The first section 32E and the second section 32F are distributed along the height direction Z of the photovoltaic module 3. Two ends of the third section 32G are connected to the first section 32E and the second section 32F respectively. The first section 32E, the second section 32F, and the third section 32G define an accommodating space 32D. The first section 32E is fixedly connected to the second surface 31B.

In this embodiment, the first section 32E, the second section 32F, and the third section 32G define the accommodating space 32D, which means that there is a preset distance between the first section 32E and the second section 32F in the height direction Z of the photovoltaic module 3. During the mounting, transportation, and use of the photovoltaic module 3, when the photovoltaic module 3 is subjected to a force along the height direction Z, the laminate 31 can cause the first section 32E to deform in a direction close to or away from the second section 32F, or the second section 32F can be driven by the color steel tile 2 to deform in a direction close to or away from the first section 32E. That is, a force acting on the frame 32 is counteracted by deformation of the first section 32E or the second section 32F, thereby reducing a risk of damages to the frame 32, prolonging the service life of the frame 32, and improving operational stability of the frame 32. At the same time, through the deformation of the first section 32E or the second section 32F, forces between the frame 32 and the laminate 31 and between the frame 32 and the color steel tile 2 are reduced, thereby reducing a risk of damages to the laminate 31 and the color steel tile 2, prolonging the service life of the laminate 31 and the color steel tile 2, prolonging the service life of the photovoltaic facility, and improving operational stability of the photovoltaic facility.

The accommodating space 32D is in communication with the opening 321, and one end of the connection pressing member 60 can extend into the accommodating space 32D, so as to abut against the second section 32F of the frame 32. The third section 32G of the frame 32 may be provided with a reinforcing rib 32Ga. The reinforcing rib 32Ga protrudes towards an inner side of the accommodating space 32D. With the reinforcing rib 32Ga, overall strength of the frame 32 is improved, which reduces a possibility of distortion and deformation of the frame 32 under an external force. At the same time, with the reinforcing rib 32Ga, the frame 32 as a whole has an excellent shock-proof effect, thereby improving safety and stability of operation of the photovoltaic module 3 and overall stability of the photovoltaic facility.

Along the width direction Y of the photovoltaic module 3, a dimension W3 of the frame 32 satisfies: 10 mm≤W3≤20 mm. For example, W3 may be 10 mm, 12 mm, 14 mm, 16 mm, 18 mm, or 20 mm, and may certainly be other values in the above range. Through the limitation on the dimension of the frame 32, it is conducive to improving stability of the structure of the frame 32, which reduces a possibility of bending and deformation of the frame 32 under an external force, thereby improving supporting and reinforcing effects of the frame 32 on the laminate 31, to prolong the overall service life of the photovoltaic module 3.

As shown in FIG. 28, the frame 32 may be bonded to the laminate 31 through the connecting adhesive 33. For example, the connecting adhesive 33 may be a structural adhesive or a solid adhesive such as a double-sided tape. The first section 32E of the frame 32 may be provided with at least one accommodating groove 32Ea. The accommodating groove 32Ea extends towards a side close to the accommodating space 32D. When the frame 32 is glued, the accommodating groove 32Ea can receive the connecting adhesive 33, thereby helping reduce a possibility of overflow from the frame 32 and helping improve stability of the connection between the frame 32 and the laminate 31.

In addition, the first section 32E of the frame 32 may be provided with a blocking portion 32Eb extending along the height direction Z of the photovoltaic module 3. The blocking portion 32Eb blocks flow of the connecting glue 33, further reducing the possibility of overflow.

Along the height direction Z of the photovoltaic module 3, a dimension H3 of the accommodating groove 32Ea satisfies: 1 mm≤H3≤2 mm. For example, H3 may be 1 mm, 1.2 mm, 1.4 mm, 1.6 mm, 1.8 mm, or 2 mm, and may certainly be other values in the above range. Along the width direction Y of the photovoltaic module 3, a dimension W4 of the accommodating groove 32Ea satisfies: 4 mm≤W4≤12 mm. For example, W4 may be 4 mm, 5 mm, 6 mm, 7 mm, 8 mm, 9 mm, 10 mm, 11 mm, or 12 mm, and may certainly be other values in the above range. When a volume of the accommodating groove 32Ea is excessively small, an anti-overflow effect of the accommodating groove 32Ea is poor, and the connecting adhesive 33 easily overflows from the accommodating groove 32Ea and flows to other regions on the frame 32, and then overflows outside the frame 32, thereby affecting a bonding effect of the connecting adhesive 33. When the volume of the accommodating groove 32Ea is excessively large, there is a need to fill more of the connecting adhesive 33 into the accommodating groove 32Ea so that the connecting adhesive 33 can bond the laminate 31, which easily causes a waste of the connecting adhesive 33 and also increases a weight of the connecting adhesive 33. As a result, the entire photovoltaic facility is excessively heavy and difficult to meet the load-bearing requirement of the building. In some embodiments of the present invention, the depth and the width of the accommodating groove 32Ea are limited, and a volume of the accommodating groove 32Ea is limited, so that the accommodating groove 32Ea can provide a sufficient receiving space for the connecting adhesive 33, which, at the same time, further improves the anti-overflow effect of the accommodating groove 32Ea, to improve stability of the connection between the laminate 31 and the frame 32.

As shown in FIG. 27 and FIG. 28, in some embodiments, the connection pressing member 60 includes a second pressing portion 601. The second pressing portion 601 can extend into the opening 321 and abut against the frame 32 along the height direction Z of the photovoltaic module 3. The second section 32F of the frame 32 is provided with a third limiting protrusion 32Fa at an end close to the opening 321. The third limiting protrusion 32Fa extends towards the laminate 31 along the height direction Z of the photovoltaic module 3, and the third limiting protrusion 32Fa can abut against the second pressing portion 601 along the width direction Y of the photovoltaic module 3.

The second pressing portion 601 of the connection pressing member 60 abuts against the second section 32F of the frame 32 to press the frame 32 onto the clamping body 11, and the second section 32F is provided with the third limiting protrusion 32Fa. The third limiting protrusion 32Fa can abut against the second pressing portion 601 along the width direction Y of the photovoltaic module 3, thereby limiting the photovoltaic module 3, reducing a possibility of detachment of the second pressing portion 601 from the frame 32, and further improving stability of the connection between the clamping body 11 and the photovoltaic module 3.

As shown in FIG. 27, the second pressing portion 601 may be provided with a first pressing section 601A and a second pressing section 601B. The first pressing section 601A and the second pressing section 601B are connected to each other. The first pressing section 601A extends along the height direction Z of the photovoltaic module 3, and the second pressing section 601B extends along the width direction Y of the photovoltaic module 3. That is, the second pressing portion 601 may have an L-shaped structure as a whole. The first pressing section 601A can abut against the second section 32F of the frame 32, and the first pressing section 601A can also fit the third limiting protrusion 32Fa, to limit the position of the second pressing portion 601. This design improves stability of fitting between the second pressing portion 601 and the frame 32, thereby improving stability of mounting of the photovoltaic module 3.

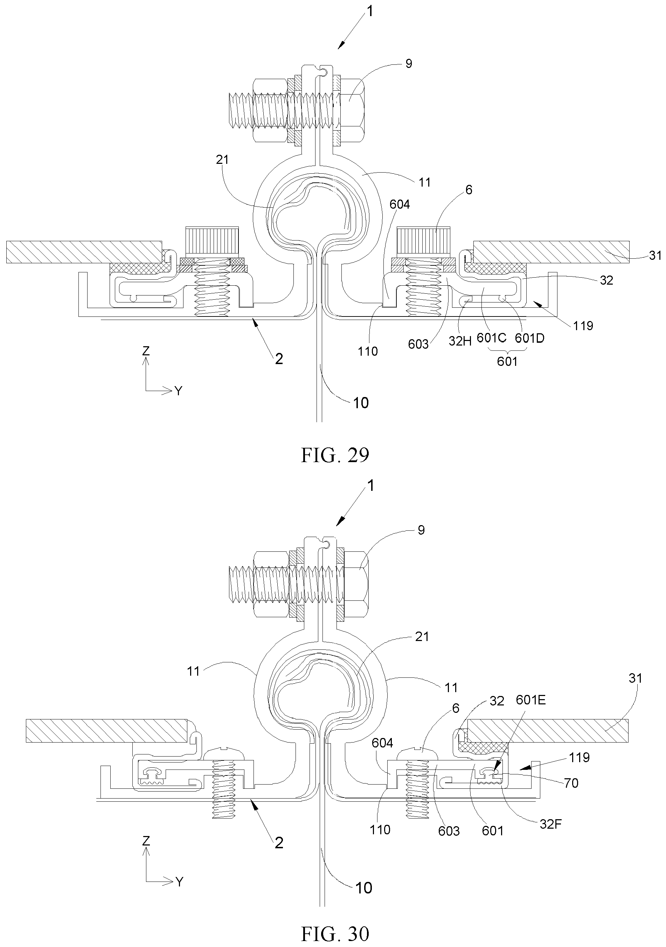

As shown in FIG. 29, in some other embodiments, the second pressing portion 601 may be provided with a pressing body 601C and a pressing protrusion 601D. The pressing body 601C may extend along the width direction Y of the photovoltaic module 3. The pressing protrusion 601D is arranged on the pressing body 601C and protrudes towards a side close to the clamping body 11. The pressing protrusion 601D may be an arc-shaped protrusion. The pressing protrusion 601D can abut against the second section 32F of the frame 32, and can also abut against and fit the third limiting protrusion 32Fa.

The frame 32 may also be provided with a flanging 32H. The flanging 32H is turned up towards the inner side of the accommodating space 32D, and can abut against the pressing protrusion 601D along the width direction Y of the photovoltaic module 3, thereby limiting the second pressing portion 601 and reducing a possibility of detachment of the second pressing portion 601 from the frame 32.

As shown in FIG. 27, in some embodiments, the clamping body 11 is provided with a second bearing groove 119, and the second bearing groove 119 extends towards the color steel tile 2 along the height direction Z of the photovoltaic module 3. The frame 32 is received in the second bearing groove 119, and the frame 32 abuts against a bottom wall of the second bearing groove 119 along the height direction Z of the photovoltaic module 3.

The frame 32 may be partially received in the second bearing groove 119 or wholly received in the second bearing groove 119. Along the height direction Z of the photovoltaic module 3, the bottom wall of the second bearing groove 119 has one end abutting against the frame 32 and the other end abutting against the color steel tile 2, thereby helping further improve stability of mounting of the photovoltaic module 3. Along the width direction Y of the photovoltaic module 3, the sidewall of the frame 32 can abut against a sidewall of the second bearing groove 119. That is, the second bearing groove 119 can limit the photovoltaic module 3, which reduces a possibility of sliding and deviation of the photovoltaic module 3 on the clamping body 11, thereby improving stability of the connection between the photovoltaic module 3 and the clamp 1 and improving stability of mounting of the photovoltaic module 3 on the color steel tile 2. On the other hand, the second bearing groove 119 may also guide the mounting of the photovoltaic module 3, thereby facilitating assembly of the photovoltaic module 3 and the clamp 1 and improving mounting efficiency of the photovoltaic module 3.

As shown in FIG. 27, in some embodiments, the connection pressing member 60 further includes a limiting section 602. The limiting section 602 is located outside the frame 32 and is connected to the second pressing portion 601. Along the width direction Y of the photovoltaic module 3, the limiting section 602 has one end abutting against the frame 32 and the other end abutting against the sidewall of the second bearing groove 119.

The limiting section 602 extends along the height direction Z of the photovoltaic module 3, which may abut against the sidewall of the frame 32 and the sidewall of the second bearing groove 119. Through the abutment fit between the limiting section 602 and the sidewall of the frame 32, it is conducive to further improving stability of the connection between the frame 32 and the connection pressing member 60. Certain friction is generated between the limiting section 602 and the frame 32 due to mutual abutment. Under an action of the friction, a possibility of relative sliding between the connection pressing member 60 and the photovoltaic module 3 is reduced, and stability of the mounting of the photovoltaic module 3 is further improved. On the other hand, through the abutment fit between the limiting section 602 and the sidewall of the second bearing groove 119, it is conducive to limiting the position of the connection pressing member 60, thereby helping improve stability of mounting of the connection pressing member 60 and the photovoltaic module 3 in the second bearing groove 119 and improving stability and reliability of a connection among the clamping body 11, the connection pressing member 60, and the photovoltaic module 3.

As shown in FIG. 30, in some embodiments, the second pressing portion 601 is provided with a fourth gasket 70, and the second pressing portion 601 abuts against the second section 32F of the frame 32 through the fourth gasket 70.

The fourth gasket 70 may be a rubber part. The second pressing portion 601 is connected to the second section 32F of the frame 32 through the fourth gasket 70. The fourth gasket 70 can cushion and protect the frame 32, which reduces a possibility of hard contact of the second pressing portion 601 with the frame 32, thereby reducing a possibility of scratching and wear of the frame 32 during the connection of the second pressing portion 601 and the frame 32 and prolonging the service life of the photovoltaic module 3, to ensure overall stable and normal operation of the photovoltaic facility. At the same time, through the arrangement of the fourth gasket 70, it is also conducive to improving friction between the second pressing portion 601 and the frame 32, thereby improving stability of fitting between the second pressing portion 601 and the frame 32 and wind resistance of the photovoltaic module 3.

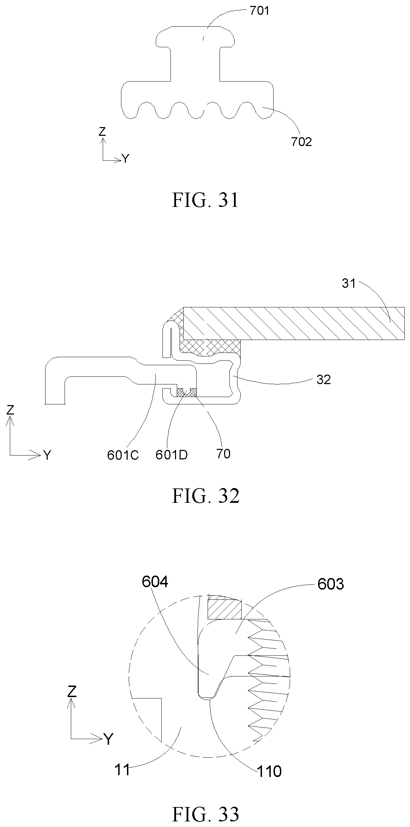

As shown in FIG. 30 and FIG. 31, in some embodiments, the second pressing portion 601 is provided with a third mounting groove 601E, and the fourth gasket 70 includes a mounting fitting portion 701. The mounting fitting portion 701 can extend into the third mounting groove 601E and engage with the third mounting groove 601E.

Through the fitting between the mounting fitting portion 701 and the third mounting groove 601E, a connection between the fourth gasket 70 and the second pressing portion 601 is realized. In this connection manner, it is conducive to improving stability of the connection between the fourth gasket 70 and the second pressing portion 601, which reduces a possibility of fall-off of the fourth gasket 70 from the second pressing portion 601, thereby improving stability of fitting between the second pressing portion 601 and the frame 32 and improving stability of the connection between the connection pressing member 60 and the photovoltaic module 3.

As shown in FIG. 32, in some other embodiments, the fourth gasket 70 may sleeve an outer side of the second pressing portion 601.

As shown in FIG. 30 and FIG. 31, in some embodiments, the fourth gasket 70 is provided with a continuous protruding structure 702, and the protruding structure 702 abuts against the second section 32F of the frame 32.

Through the arrangement of the protruding structure 702, it is conducive to increasing friction between the fourth gasket 70 and the second section 32F of the frame 32, thereby improving stability of abutment fit between the second pressing portion 601 and the frame 32 and improving stability of the connection between the connection pressing member 60 and the photovoltaic module 3.

As shown in FIG. 29 and FIG. 30, in some embodiments, the connection pressing member 60 further includes a second mounting portion 603, and along the width direction Y of the photovoltaic module 3, the second mounting portion 603 is located on one side of the second pressing portion 601 and is connected to the second pressing portion 601. The second mounting portion 603 is connected to the clamping body 11 through the first fastener 6.

The second mounting portion 603 may extend along the width direction Y of the photovoltaic module 3, and the second mounting portion 603 may also abut against the clamping body 11 along the height direction Z of the photovoltaic module 3, and the first fastener 6 may be a bolt or a screw. The first fastener 6 and the clamping body 11 are provided with corresponding mounting holes. The first fastener 6 extends into the mounting holes to connect the connection pressing member 60 and the clamping body 11 together. This connection manner has high reliability, which reduces a possibility of unstable mounting of the photovoltaic module 3 caused by shaking or sliding of the connection pressing member 60 relative to the clamping body 11, thereby improving stability of the entire photovoltaic facility.

In some other embodiments, the mounting hole in the clamping body 11 is a round hole, with a size matching that of the first fastener 6, while the mounting hole in the second mounting portion 603 may be a waist-shaped hole. When the first fastener 6 extends into the waist-shaped hole, the first fastener 6 may move relative to the connection pressing member 60. When the clamping body 11 is connected to the connection pressing member 60, the first fastener 6 may be first extended into the mounting holes, and before the first fastener 6 is tightened, the connection pressing member 60 may also move relative to the first fastener 6 and the clamping body 11. Therefore, a mounting position of the connection pressing member 60 may also be adjusted, thereby adjusting a mounting position of the photovoltaic module 3. When the connection pressing member 60 and the photovoltaic module 3 are moved to appropriate positions, the first fastener 6 is tightened, so that the connection pressing member 60 and the clamping body 11 are fixedly connected together, that is, the photovoltaic module 3 is fixed to the clamping body 11.

In the above embodiments, the second mounting portion 603 may be connected to the second pressing portion 601 through the limiting section 602, or the second mounting portion 603 may be directly connected to the second pressing portion 601.

As shown in FIG. 30, FIG. 33, and FIG. 34, in some embodiments, one of the second mounting portion 603 and the clamping body 11 is provided with a second positioning groove 110, and the other is provided with a second positioning protrusion 604. The second positioning protrusion 604 can extend into the second positioning groove 110 and engage with the second positioning groove 110.

A shape of the second positioning protrusion 604 matches that of the second positioning groove 110, which may be a shape such as a circle, a rectangle, or a trapezoid. Through the engagement between the second positioning protrusion 604 and the second positioning groove 110, the mounting of the connection pressing member 60 can be limited, thereby improving accuracy of mounting of the connection pressing member 60 and improving accuracy of mounting of the photovoltaic module 3. At the same time, this design can further limit the connection pressing member 60, thereby improving stability of the connection between the connection pressing member 60 and the clamping body 11, reducing a possibility of fall-off of the connection pressing member 60 from the clamping body 11, and improving stability of mounting of the photovoltaic module 3.

As shown in FIG. 30, in some embodiments, the clamp 1 includes two symmetrically arranged clamping bodies 11, and the two clamping bodies 11 are connected through a second fastener 9. A clamping space 12 is provided between the two clamping bodies 11, and part of the color steel tile 2 can extend into the clamping space 12.

When two adjacent color steel tiles 2 are connected to each other, the male rib 22 of one color steel tile 2 can be connected to the female rib 23 of the other color steel tile 2 to form a locking structure 21. The locking structure 21 may extend into the clamping space 12. That is, the clamp 1 clamps the locking structure 21. A cross-sectional shape of the clamping space 12 can match a shape of the locking structure 21. For example, a sidewall of the clamping space 12 may have an outwardly protruding arc-shaped structure, which can clamp the arc-shaped locking structure 21 more stably and firmly. Alternatively, the clamping space 12 may also have an upright sidewall extending along the height direction Z of the photovoltaic module 3 to match the 360° upright locking structure 21. The second fastener 9 may be a bolt. When the locking structure 21 extends into the clamping space 12, the second fastener 9 can be tightened to enable the clamp 1 to clamp the locking structure 21. In addition, in some other embodiments, the color steel tile 2 is further provided with a raised folding portion (not shown), and the clamp 1 may alternatively be clamped on the folding portion.

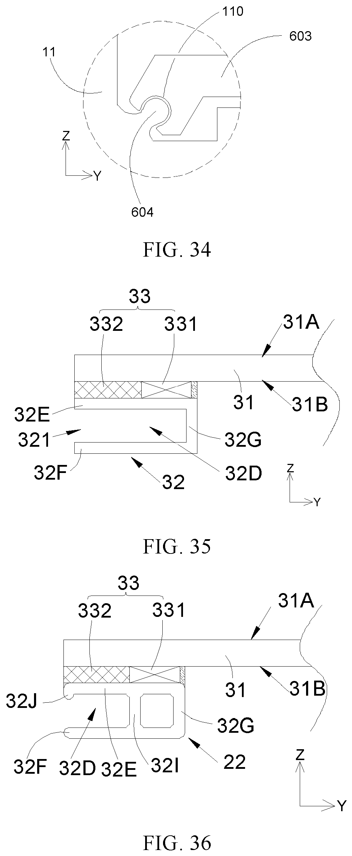

In this embodiment, the photovoltaic module 3 may alternatively have a structure shown in FIG. 35 or FIG. 36, and the laminate 31 has a same structure as the above laminate 31 and also has the same technical effect. Details are not described herein again. The frame 32 includes a first section 32E, a second section 32F, and a third section 32G. The first section 32E and the second section 32F are distributed along the height direction Z of the photovoltaic module 3. Two ends of the third section 32G are connected to the first section 32E and the second section 32F respectively. The first section 32E, the second section 32F, and the third section 32G define an accommodating space 32D. The first section 32E is fixedly connected to the second surface 31B. The accommodating space 32D is in communication with the opening 321, and one end of the connection pressing member 60 can extend into the accommodating space 32D, so as to abut against the second section 32F of the frame 32.

The first section 32E and the second surface 31B are bonded and fixed through the connecting adhesive 33 to simplify a fixing structure of the frame 32 and the laminate 31 and reduce mounting costs of the frame 32 and the laminate 31. The connecting adhesive 33 includes, but is not limited to, glue, an adhesive tape, and a double-sided tape. A specific type of the connecting adhesive 33 is not limited in some embodiments of the present invention.

The connecting adhesive 33 includes at least a first bonding body 331 and a second bonding body 332 distributed along the width direction Y of the photovoltaic module 3. The first bonding body 331 is used to pre-fix the first section 32E and the second surface 31B, and the second bonding body 332 is used to bond and fix the first section 32E and the second surface 31B. That is, during the fixing of the frame 32 and the laminate 31, the frame 32 and the laminate 31 are pre-fixed through the first bonding body 331 first, and then the frame 32 and the laminate 31 are completely fixed through the second bonding body 332, which reduces a risk of deviation of the frame 32 during the bonding under an external force, thereby improving accuracy of a bonding position of the frame 32 on the second surface 31B.

An angle between an extension direction of the third section 32G and the height direction Z of the photovoltaic module 3 satisfies: 0° to 90°. For example, the angle between the extension direction of the third section 32G and the height direction Z of the photovoltaic module 3 may be 0, 10°, 20°, 30°, 40°, 50°, 60°, 70°, 80°, 90°, or the like. That is, the third section 32G may extend along the height direction Z of the photovoltaic module 3, or the third section 32G may extend obliquely, to increase structural flexibility of the frame 32. The extension direction of the third section 32G is not limited in the present invention. FIG. 35 and FIG. 36 are based on an example in which the third section 32G extends along the height direction Z of the photovoltaic module 3.

As shown in FIG. 36, the frame 32 further includes a supporting portion 32I. The supporting portion 32I is located in the accommodating space 32D. Along the height direction Z of the photovoltaic module 3, two ends of the supporting portion 32I are connected to the first section 32E and the second section 32F respectively. Along the width direction of the frame 32, the supporting portion 32I divides the accommodating space 32D into a plurality of cavities. The supporting portion 32I is configured to support the first section 32E and the second section 32F, which reduces a degree of deformation of the first section 32E and the second section 32F during the mounting, transportation, and use, thereby reducing a risk of damages to the frame 32 due to a large degree of deformation, prolonging the service life of the frame 32, and improving operational stability of the frame 32.

One supporting portion 32I may be provided, or a plurality of supporting portions 32I are distributed along the width direction Y of the photovoltaic module 3.

In addition, an angle between an extension direction of the supporting portion 32I and the height direction Z of the photovoltaic module 3 satisfies: 0° to 90°. For example, the angle between the extension direction of the supporting portion 32I and the height direction Z of the photovoltaic module 3 may be 0, 10°, 20°, 30°, 40°, 50°, 60°, 70°, 80°, 90°, or the like. That is, the supporting portion 32I may extend along the height direction Z of the photovoltaic module 3, or the supporting portion 32I may extend obliquely, to increase structural flexibility of the frame 32. The extension direction of the supporting portion 32I is not limited in some embodiments of the present invention. FIG. 35 and FIG. 36 are based on an example in which the supporting portion 32I extends along the height direction Z of the photovoltaic module 3.

As shown in FIG. 36, an end of the first section 32E away from the third section 32G is provided with a limiting bulge 32J, and/or an end of the second section 32F away from the third section 32G is provided with the limiting bulge 32J. Along the height direction Z of the photovoltaic module 3, the limiting bulge 32J blocks part of the accommodating space 32D. The limiting bulge 32J can limit movement of the clamp in the width direction Y of the frame 32, thereby reducing a risk of separation of the clamp from the frame 32 during the mounting, transportation, and use and improving stability of the connection between the clamp and the frame 32.

A specific mounting method for a photovoltaic facility provided in this embodiment is as follows.

Firstly, the clamp 1 clamps the color steel tiles 2. The two clamping bodies 11 of the clamp 1 may be located on two sides of the locking structure 21 of the color steel tiles 2 respectively. That is, the locking structure 21 extends into the clamping space 12. Then, the second fastener 9 is tightened to cause the clamp 1 to clamp the locking structure 21. One end of the connection pressing member 60 is extended into the frame 32 and abuts against the second section 32F of the frame 32. The frame 32 is pressed against the clamping body 11, and the connection pressing member 60 is connected to the clamping body 11 through the first fastener 6, so that the photovoltaic module 3 is fixed to the clamping body 11 through the connection pressing member 60, thereby realizing the connection between the photovoltaic module 3 and the color steel tile 2.

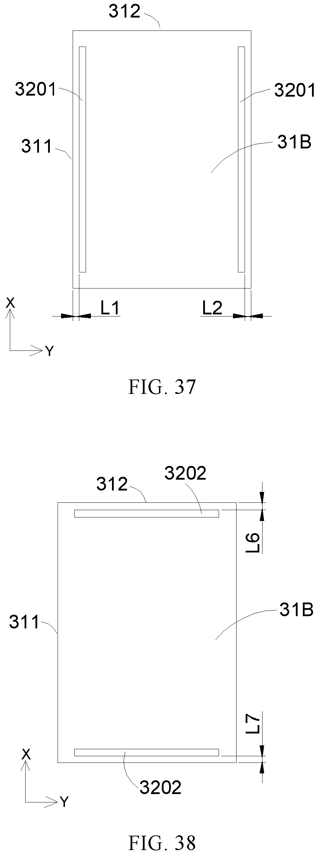

In any one of the above embodiments, as shown in FIG. 37 to FIG. 40, the laminate 31 includes two first edges 311 arranged opposite to each other along the width direction Y thereof, and two second edges 312 arranged opposite to each other along the length direction X thereof. The frame 32 is arranged at a middle position of the laminate 31, and/or the frame 32 is arranged at the first edge 311 of the laminate 31, and/or the frame 32 is arranged at the second edge 312 of the laminate 31.

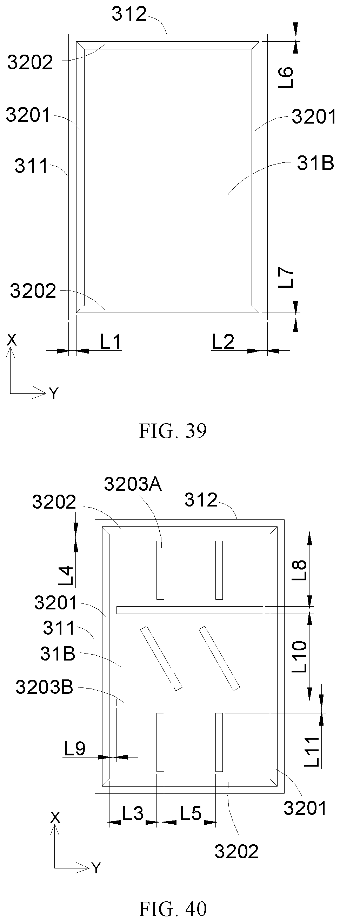

As shown in FIG. 37, FIG. 39, and FIG. 40, the frame 32 includes two first frames 3201 arranged opposite to each other along the width direction Y of the photovoltaic module 3, and length directions of the first frames 3201 are parallel to the length direction X of the photovoltaic module 3. At least one of the two first frames is provided with the opening 321. Taking FIG. 39 as an example, in the width direction Y of the photovoltaic module 3, a minimum distance L1 between the first frame 3201 on the left and the first edge 311 on the left satisfies: 0≤L1≤150 mm, and a minimum distance L2 between the first frame 3201 on the right and the first edge 311 on the right satisfies: 0≤L2≤150 mm.

The arrangement of the two first frames 3201 near the first edge 311 of the laminate 31 reduces a risk of damages to the first edge 311 due to stress concentration during the mounting, transportation, and use, thereby prolonging the service life of the laminate 31, prolonging the service life of the photovoltaic module 3, and improving operational stability of the photovoltaic module 3. If L1>150 mm or L2>150 mm, a distance between the first frame 3201 and the first edge 311 is larger, and the first frame 3201 may have a poor protection effect on the first edge 311. Therefore, 0≤L1≤150 mm and 0≤L2≤150 mm can improve the protection effect of the frame 32 on the first edge 311 of the laminate 31.

A length of the first frame 3201 is determined according to a length of the first edge 311, and the lengths of the two first frames 3201 may be the same or different.

As shown in FIG. 38, FIG. 39, and FIG. 40, the frame 32 includes two second frames 3202 arranged opposite to each other along the length direction X of the photovoltaic module 3, and length directions of the second frames 3202 are parallel to the width direction Y of the photovoltaic module 3. At least one of the two second frames is provided with the opening 321. Taking FIG. 39 as an example, in the length direction X of the photovoltaic module 3, a minimum distance L6 between the upper second frame 3202 and the upper second edge 312 satisfies: 0≤L6≤150 mm, and a minimum distance L7 between the lower second frame 3202 and the lower second edge 312 satisfies: 0≤L7≤150 mm.

The arrangement of the two second frames 3202 near the second edge 312 of the laminate 31 reduces a risk of damages to the second edge 312 due to stress concentration during the mounting, transportation, and use, thereby prolonging the service life of the laminate 31, prolonging the service life of the photovoltaic module 3, and improving operational stability of the photovoltaic module 3. If L6>150 mm or L7>150 mm, a distance between the second frame 3202 and the second edge 312 is larger, and the second frame 3202 may have a poor protection effect on the second edge 312. Therefore, 0≤L6≤150 mm and 0≤L7≤150 mm can improve the protection effect of the frame 32 on the second edge 312 of the laminate 31.

A length of the second frame 3202 is determined according to a length of the second edge 312, and the lengths of the two second frames 3202 may be the same or different.

As shown in FIG. 40, the frame 32 further includes a reinforcing frame 3203, the reinforcing frame 3203 includes at least one third frame 3203A, along the width direction Y of the photovoltaic module 3, the third frame 3203A is located between the two first frames 3201, and an angle between a length direction of the third frame 3203A and the length direction X of the photovoltaic module 3 satisfies: 0°≤β1<90°. For example, β1 may be 0°, 10°, 20°, 30°, 40°, 50°, 60°, 70°, 80°, 89°, or the like. That is, the third frame 3203A may extend along the length direction X of the photovoltaic module 3, and the third frame 3203A may alternatively extend obliquely. In the width direction Y of the photovoltaic module 3, a minimum distance L3 between the third frame 3203A and the first frame 3201 on the left satisfies: 300 mm≤L3≤450 mm. In the length direction X of the photovoltaic module 3, a minimum distance L4 between the third frame 3203A and the first frame 3201 on the right satisfies: 0≤L4≤300 mm. One third frame 3203A is provided, or a plurality of third frames 3203A are distributed along the width direction Y and/or the length direction X of the photovoltaic module 3. Along the width direction Y of the photovoltaic module 3, a minimum distance L5 between the adjacent third frames 3203A satisfies: 200 mm≤L5≤550 mm.

In this embodiment, the third frame 3203A is arranged at a middle position of the laminate 31 and supports the laminate 31, which reduces a degree of deformation of the laminate 31 in the height direction Z under a force, thereby reducing a risk of damages to the laminate 31 due to a large degree of deformation, prolonging the service life of the photovoltaic module 3, and improving operational stability of the photovoltaic module 3.

If L3<300 mm and L5<200 mm, a larger number of third frames 3203A are required, cost of the photovoltaic module 3 is increased, and at the same time, an overall weight of the photovoltaic module 3 is increased, which is not conducive to mounting and transportation of the photovoltaic module 3. If L5<200 mm, a distance between the adjacent third frames 3203A is smaller, under the influence of factors such as machining errors and mounting errors, there is a risk of interference between the adjacent third frames 3203A, thereby increasing mounting difficulty of the third frames 3203A. If L3>450 mm, L4>300 mm, and L5>550 mm, distances between the third frame 3203A and the first frame 3201 and between the adjacent third frames 3203A are larger, which reduces a supporting effect of the third frames 3203A on the laminate 31. Therefore, 300 mm≤L3≤450 mm, 0≤L4≤300 mm, and 200 mm≤L5≤550 mm can reduce the number of the third frames 3203Aand reduce the cost and the weight of the photovoltaic module 3, which reduces the mounting difficulty of the third frames 3203A, thereby helping shorten a mounting time of the photovoltaic module 3, improving the supporting effect of the third frames 3203A on the laminate 31, and improving operational stability of the laminate 31.

A length of the third frame 3203A is determined according to a length of the first edge 311 and a number of sections. When a plurality of third frames 3203A are provided, the third frames 3203A may be evenly or unevenly distributed and inclination directions of the third frames 3203A may be the same or different.

As shown in FIG. 40, the reinforcing frame 3203 further includes at least one fourth frame 3203B, along the length direction X of the photovoltaic module 3, the fourth frame 3203B is located between the third frame 3203A and the second frame 3202, and an angle between an extension direction of the fourth frame 3203B and the width direction Y of the photovoltaic module 3 satisfies: 0°≤β2<90°. For example, β2 may be 0°, 10°, 20°, 30°, 40°, 50°, 60°, 70°, 80°, 89°, or the like. In the length direction X of the photovoltaic module 3, a minimum distance L8 between the fourth frame 3203B and the second frame 3202 satisfies: 500 mm≤L8≤1150 mm. In the width direction Y of the photovoltaic module 3, a minimum distance L9 between the fourth frame 3203B and the first frame 3201 satisfies: 5 mm≤L9≤30 mm. One fourth frame 3203B is provided, or a plurality of fourth frames 3203B are distributed along the length direction X and/or the width direction Y of the photovoltaic module 3. Along the length direction X of the photovoltaic module 3, a minimum distance L10 between the adjacent fourth frames 3203B satisfies: 300 mm≤L10≤750 mm.

In this embodiment, the fourth frame 3203B is arranged at a middle position of the laminate 31 and supports the laminate 31, which reduces a degree of deformation of the laminate 31 in the height direction Z under a force, thereby reducing a risk of damages to the laminate 31 due to a large degree of deformation, prolonging the service life of the photovoltaic module 3, and improving operational stability of the photovoltaic module 3.

If L8<500 mm and L10<300 mm, a larger number of fourth frames 3203B are required, cost of the photovoltaic module 3 is increased, and at the same time, an overall weight of the photovoltaic module 3 is increased, which is not conducive to mounting and transportation of the photovoltaic module 3. If L8>1150 mm and L9>30 mm, distances between the fourth frame 3203B and the third frame 3203A, between the fourth frame 3203B and the second frame 3202, and between the adjacent fourth frames 3203B are larger, which reduces a supporting effect of the fourth frames 3203B on the laminate 31. Therefore, 500 mm≤L8≤1150 mm, 0≤L9≤30 mm, and 300 mm≤L10≤750 mm can reduce the number of the fourth frames 3203B, reduce the cost and the weight of the photovoltaic module 3, and improve the supporting effect of the fourth frames 3203B on the laminate 31, thereby improving operational stability of the laminate 31.

A length of the fourth frame 3203B is determined according to lengths of the first edge 311 and the second edge 312 and a number of sections.

As shown in FIG. 40, when the third frame 3203A and the fourth frame 3203B are both arranged on the laminate 31, along the length direction X of the photovoltaic module 3, a minimum distance L11 between the third frame 3203A and the fourth frame 3203B adjacent to each other satisfies: 5 mm≤L11≤30 mm.

In this embodiment, if L11<5 mm, a distance between the third frame 3203A and the fourth frame 3203B is smaller, under the influence of factors such as machining errors and mounting errors, there is a risk of interference between the third frame 3203A and the fourth frame 3203B, thereby increasing mounting difficulty of the third frame 3203A and the fourth frame 3203B. If L11>30 mm, the distance between the third frame 3203A and the fourth frame 3203B is larger, and fewer third frames 3203A and fourth frames 3203B are provided, which reduces a supporting effect of the third frame 3203A and the fourth frame 3203B on the laminate 31. Therefore, 5 mm≤L11≤ 30 mm reduces the mounting difficulty of the third frame 3203A and fourth frames 3203B, thereby shortening a mounting time of the photovoltaic module 3, and at the same time, improves the supporting effect of the third frame 3203A and fourth frames 3203B on the laminate 31, thereby improving operational stability of the laminate 31.

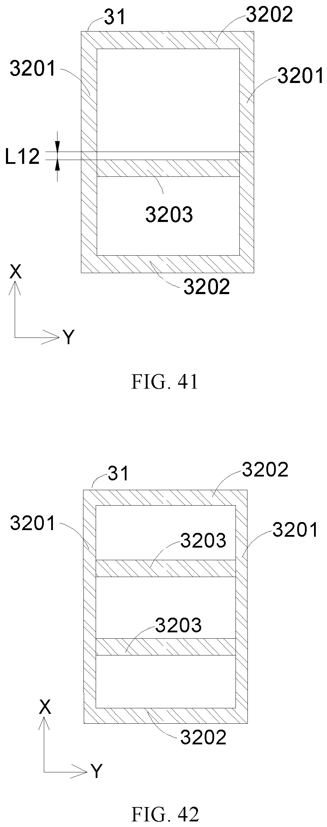

As shown in FIG. 41, when an edge structure of the laminate 31 is fragile and an entire edge region of the laminate 31 is required to be supported, the frame 32 includes two first frames 3201 and two second frames 3202. For example, the first frames 3201 extend along the length direction X of the photovoltaic module 3, the second frames 3202 extend along the width direction Y of the photovoltaic module 3, and the two first frames 3201 are fixedly connected to the two second frames 3202 respectively, so that the frame 32 forms a rectangular structure. The two first frames 3201 and the two second frames 3202 are sequentially connected and fixed end to end to form the rectangular frame 32 matching the size of the laminate 31, thereby improving structural strength of edges of the laminate 31, so that when the photovoltaic module 3 is subjected to a force along the height direction Z, an edge part thereof is not easily damaged, thereby improving stability and prolonging the service life of the photovoltaic module 3.

Further, as shown in FIG. 41 and FIG. 42, the frame 32 further includes at least one reinforcing frame 3203, and the reinforcing frame 3203 has a same cross-sectional structure as the first frame 3201 and the second frame 3202. Along the width direction Y of the photovoltaic module 3, two ends of the reinforcing frame 3203 are fixedly connected to the first frames 3201 respectively, and along the length direction X of the photovoltaic module 3, the reinforcing frame 3203 is arranged between the two second frames 3202.

In order to further enhance a supporting force of the frame 32, the frame 32 may also be provided with at least one reinforcing frame 3203, and the reinforcing frame 3203 includes the first portion 32A, the second portion 32B, and the third portion 32C. That is, a cross-sectional structure of the reinforcing frame 3203 is the structure described in the above embodiments. The reinforcing frame 3203 extends in a same direction as the second frame 3202, and two ends thereof along the width direction Y of the photovoltaic module 3 are respectively fixedly connected to the two first frames 3201 to improve structural stability of the frame 32.

When the photovoltaic module 3 is subjected to a force along the height direction Z, the reinforcing frame 3203 can transfer a local load of the laminate 31 to two ends of the laminate 31 along the width direction Y, which increases a stress area of the laminate 31, thereby reducing a load of the laminate 31 per unit area and preventing damages to the laminate 31 due to stress concentration. Therefore, the arrangement of the reinforcing frame 3203 can improve trampling resistance and wind resistance of the photovoltaic module 3.

Some embodiments are listed below.

In some embodiments, as shown in FIG. 41, one reinforcing frame 3203 is provided, and along the length direction X of the photovoltaic module 3, a distance between the reinforcing frame 3203 and a midpoint of the first frame 3201 is L12, and 20 mm≤L12≤40 mm. For example, L12 may be, for example, 20 mm, 21 mm, 23 mm, 25 mm, 26 mm, 28 mm, 30 mm, 32 mm, 34 mm, 35 mm, 37 mm, 39 mm, or 40 mm, or may be other values in the above range, which is not limited in the present invention.

In this embodiment, an overall structure of the frame 32 is in a 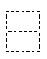 shape. In order to ensure that the force is evenly distributed on the laminate 31, the reinforcing frame 3203 is arranged at a midpoint position of the first frame 3201. However, since a junction box of the photovoltaic module 3 is generally arranged on a back surface of the laminate 31 and is at a central position in the length direction X of the photovoltaic module 3, when mounted, the reinforcing frame 3203 should deviate by a certain distance relative to the midpoint of the first frame 3201 to avoid the junction box. L12 is a deviation distance of the reinforcing frame 3203. When L12 ranges from 20 mm to 40 mm, interference between the reinforcing frame 3203 and the junction box can be prevented, and a uniform force on all parts of the photovoltaic module 3 can be ensured.

In some other embodiments, as shown in FIG. 42, two reinforcing frames 3203 are provided, and an overall structure of the frame 32 is in a stair shape. In order to ensure even distribution of the force on the laminate 31, the two reinforcing frames 3203 are respectively arranged at three equal points of the first frame 3201.

For a connection structure between the components of the frame 32, the present invention also provides the following embodiments.

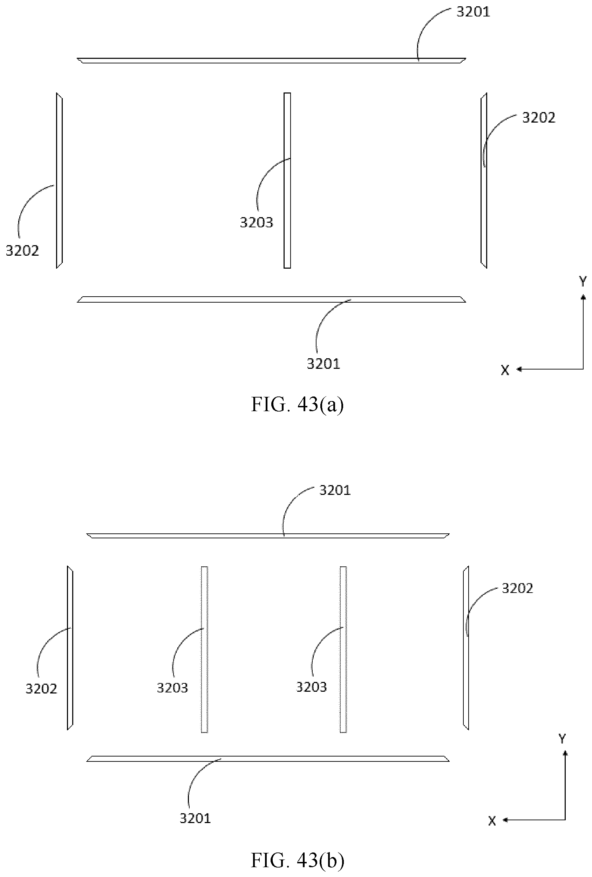

In a first embodiment, as shown in FIG. 43(a) and FIG. 43(b), the first frame 3201, the second frame 3202, and the reinforcing frame 3203 are independent structures, and all the three are integrated structures. The first frame 3201 and the second frame 3202 as well as the first frame 3201 and the reinforcing frame 3203 are fixedly connected by welding.

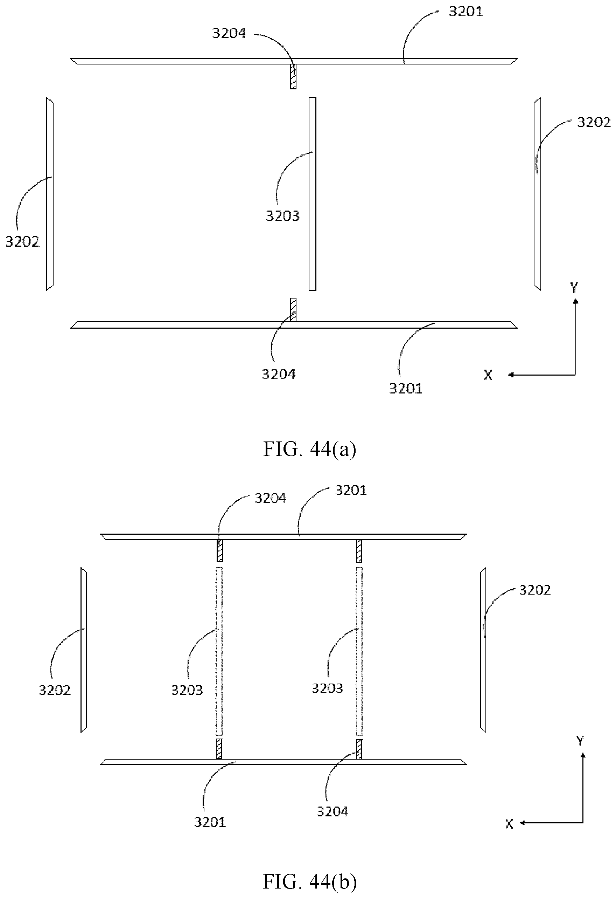

In a second embodiment, as shown in FIG. 44(a) and FIG. 44(b), the first frame 3201, the second frame 3202, and the reinforcing frame 3203 are independent structures, and all the three are integrated structures. The frame 32 further includes insertion rods 3204, a same number of insertion rods 3204 as the reinforcing frame 3203 are welded on each first frame 3201, along the width direction Y of the photovoltaic module 3, the two first frames 3201 are respectively fixedly connected to two ends of the reinforcing frame 3203 through the insertion rods 3204, and the first frame 3201 and the second frame 3202 are fixedly connected by welding.

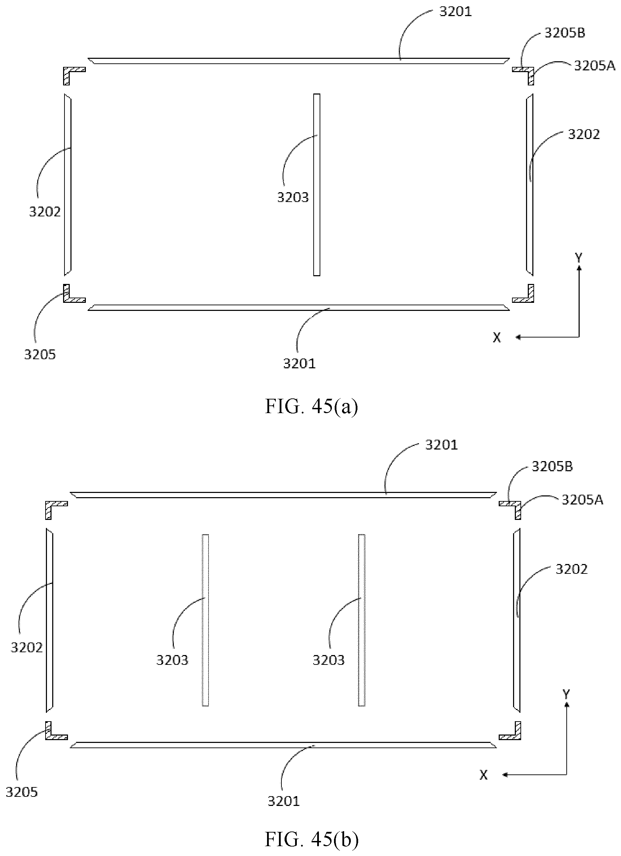

In a third embodiment, as shown in FIG. 45(a) and FIG. 45(b), the first frame 3201, the second frame 3202, and the reinforcing frame 3203 are independent structures, and all the three are integrated structures. The frame 32 further includes corner connecting members 3205, and the corner connecting member 3205 includes a first section 3205A extending along the width direction Y of the photovoltaic module 3 and a second section 3205B extending along the length direction X of the photovoltaic module 3. The first section 3205A is configured to be in insertion fit with the second frame 3202, and the second section 3205B is configured to be in insertion fit with the adjacent first frame 3201, so that the first frame 3201 and the second frame 3202 are fixedly connected through the corner connecting member 3205. The first frame 3201 and the reinforcing frame 3203 are fixedly connected by welding.

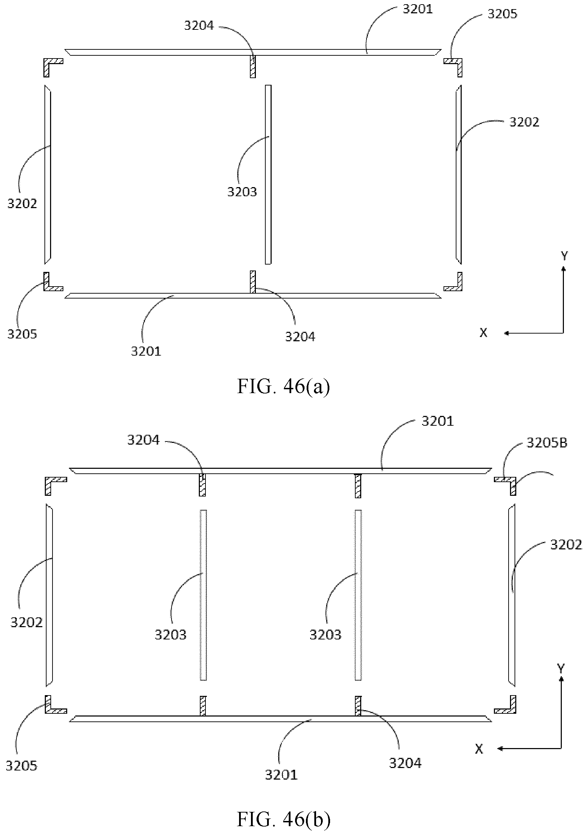

In a fourth embodiment, as shown in FIG. 46(a) and FIG. 46(b), the first frame 3201, the second frame 3202, and the reinforcing frame 3203 are independent structures, and all the three are integrated structures. The frame 32 further includes insertion rods 3204 and corner connecting members 3205, and the corner connecting member 3205 includes a first section 3205A extending along the width direction Y of the photovoltaic module 3 and a second section 3205B extending along the length direction X of the photovoltaic module 3. The first section 3205A is configured to be in insertion fit with the second frame 3202, and the second section 3205B is configured to be in insertion fit with the adjacent first frame 3201, so that the first frame 3201 and the second frame 3202 are fixedly connected through the corner connecting member 3205. A same number of insertion rods 3204 as the reinforcing frame 3203 are welded on each first frame 3201, the two first frames 3201 are respectively fixedly connected to two ends of the reinforcing frame 3203 along the width direction Y of the photovoltaic module 3 through the insertion rods 3204, and the first frame 3201 and the second frame 3202 are fixedly connected by welding.

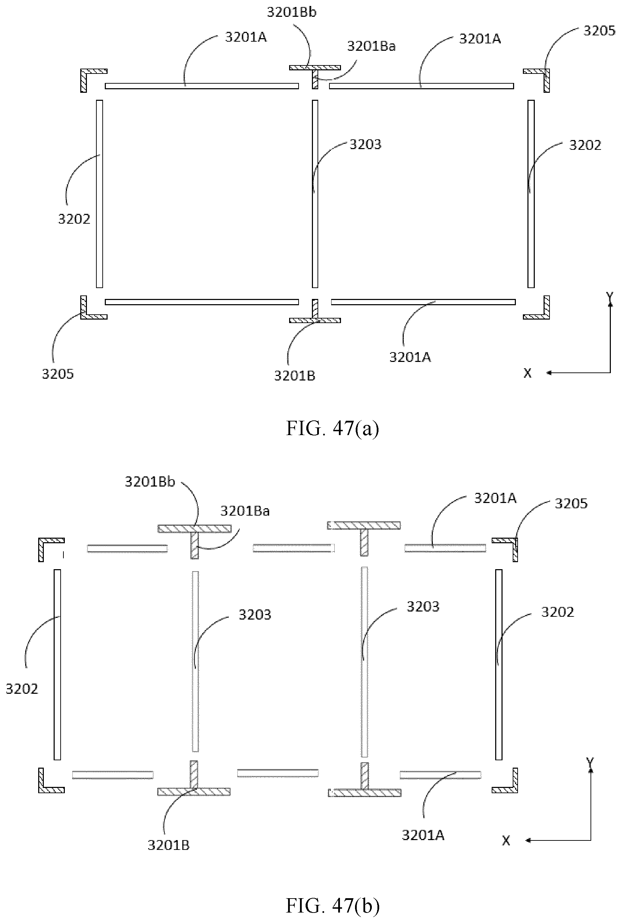

In a fifth embodiment, as shown in FIG. 47(a) and FIG. 47 (b) , the first frame 3201, the second frame 3202, and the reinforcing frame 3203 are independent structures, the second frame 3202 and the reinforcing frame 3203 have an integrated structure, and the first frame 3201 has a split structure, including a plurality of first frame segments 3201A and a plurality of inserts 3201B. The inserts 3201B each have a T-shaped structure, including a third section 3201Ba extending along the width direction Y of the photovoltaic module 3 and a fourth section 3201Bb extending along the length direction X of the photovoltaic module 3. Along the length direction X of the photovoltaic module 3, two ends of the fourth section 3201Bb are in insertion fit with two first frame segments 3201A adjacent to the fourth section 3201Bb to form the first frame 3201. The third section 3201Ba is configured to be in insertion fit with the reinforcing frame 3203. The two first frames 3201 are respectively fixedly connected to the two ends of the reinforcing frame 3203 along the width direction Y of the photovoltaic module 3 through the third sections 3201Ba. A number of inserts 3201B included in each first frame 3201 is greater than or equal to that of reinforcing frames 3203 of the frame 32. The frame 32 further includes a corner connecting member 3205, and the corner connecting member 3205 includes a first section 3205A extending along the width direction Y of the photovoltaic module 3 and a second section 3205B extending along the length direction X of the photovoltaic module 3. The first section 3205A is configured to be in insertion fit with the second frame 3202, and the second section 3205B is configured to be in insertion fit with the adjacent first frame 3201, so that the first frame 3201 and the second frame 3202 are fixedly connected through the corner connecting member 3205.

Based on the above, the first frame 3201, the second frame 3202, and the reinforcing frame 3203 of the frame 32 may be fixedly connected by welding, splicing, or a combination of welding and splicing. In addition, as shown in FIG. 43(a) and FIG. 43(b), two ends of the first frame 3201 along the length direction X of the photovoltaic module 3 and two ends of the second frame 3202 along the width direction Y of the photovoltaic module 3 may be beveled to ensure that shapes of the first frame 3201 and the second frame 3202 match and a sealed connection can be formed between the first frame 3201 and the second frame 3202.

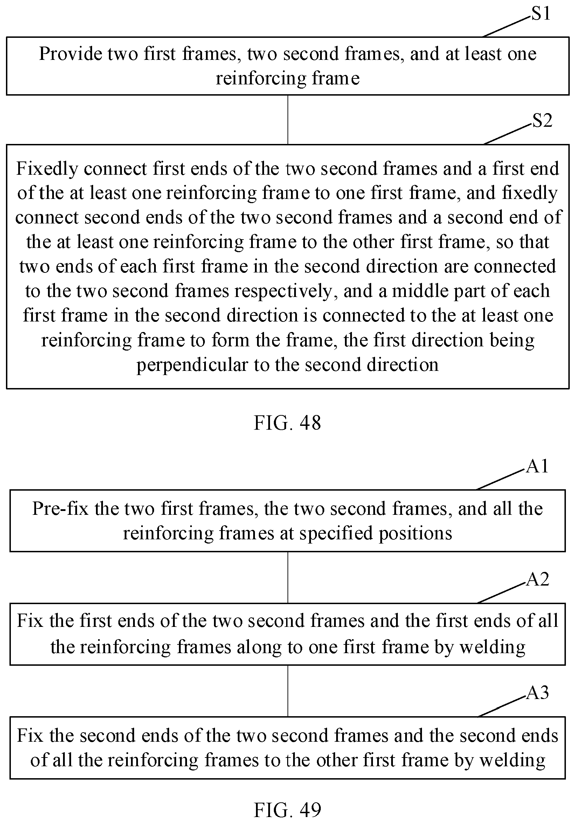

The present invention further provides a method for assembling the frame 32 shown in FIG. 41 or FIG. 42. As shown in FIG. 48, the assembly method includes the following steps.

In step S1, two first frames 3201, two second frames 3202, and at least one reinforcing frame 3203 are provided. The second frame 3202 has a first end and a second end, and the reinforcing frame 3203 has a first end and a second end.

In step S2, the first ends of the two second frames 3202 and the first end of the reinforcing frame 3203 along a first direction Y are fixedly connected to one of the first frames 3201, the second ends of the two second frames 3202 and the second end of the reinforcing frame 3203 along the first direction Y are fixedly connected to the other of the first frames 3201, so that two ends of each of the first frames 3201 in a second direction X are connected to the two second frames 3202 respectively, and a middle part of each of the first frames 3201 in the second direction X is connected to the reinforcing frame 3203 to form the frame 32.

The assembly according to the above steps enables the two first frames 3021 and the two second frames 3202 to be assembled into a rectangular structure with stable edges. At the same time, at least one reinforcing frame 3203 is arranged in the middle of the rectangular structure, which can further enhance rigidity and strength of the frame 32. The first frame 3201, the second frame 3202, and the reinforcing frame 3203 are all fixedly connected, which reduces a possibility of loosening, can ensure structural stability of the frame 32, and improve a capability of the frame 32 to resist deformation, thereby improving a supporting force of the frame 32 on the laminate 31. Moreover, the first frame 3201, the second frame 3202, and the reinforcing frame 3203 are assembled into an integral frame 32 through the above method, which also facilitates the subsequent connection with the laminate 31. There is only a need to glue the frame 32 or the laminate 31 to achieve a fixed connection therebetween. Compared with the manner of bonding the first frame 3201, the second frame 3202, and the reinforcing frame 3203 to the laminate 31 respectively, the integral frame 32 takes less time to connect to the laminate 31 and requires lower accuracy in dimensional matching, which improves assembly efficiency of the photovoltaic module 3.

This assembly method does not limit the number of the reinforcing frame 3203. As shown in FIG. 43(a) and FIG. 43(b), two structures of the frame 32 are listed in this embodiment. As shown in FIG. 43(a), if one reinforcing frame 3203 is provided, when a middle part of the first frame 3201 in the second direction X is connected to the reinforcing frame 3203, it should be ensured that a distance between the reinforcing frame 3203 and a midpoint of the first frame 3201 in the second direction X should be maintained within 20 mm to 30 mm, so as to prevent interference of the reinforcing frame 3203 with the junction box on the laminate 31 when the frame 32 is mounted on the laminate 31. At the same time, it can also be ensured that the photovoltaic module 3 provided with the frame 32 is evenly stressed at all parts. As shown in FIG. 43(b), if two reinforcing frames 3203 are provided, when a middle part of the first frame 3201 in the second direction X is connected to the reinforcing frames 3203, it should be ensured that the two reinforcing frames 3203 are respectively fixedly connected to three equal points of the first frame 3201 in the second direction X, to ensure that the photovoltaic module 3 provided with the frame 32 is evenly stressed at all parts. By analogy, when more than two reinforcing frames 3203 are provided, a specific connection position with the first frame 3201 should be set in consideration of a stress condition of the photovoltaic module 3.

In addition, as shown in FIG. 43(a), prior to step S2, two ends of the first frame 3201 along the second direction X and two ends of the second frame 3202 along the first direction Y may be beveled to ensure that shapes of the first frame 3201 and the second frame 3202 match and a sealed connection can be formed between the first frame 3201 and the second frame 3202.

It is to be noted that, in this embodiment, the first direction Y is perpendicular to the second direction X, the first direction Y is the width direction Y of the photovoltaic module 3, and the second direction X is the length direction X of the photovoltaic module 3.

In an embodiment, for step S2, as shown in FIG. 49, the assembling method includes the following steps.

In step A1, the two first frames 3201, the two second frames 3202, and the reinforcing frame 3203 are pre-fixed at specified positions.

In step A2, the first ends of the two second frames 3202 and the first end of the reinforcing frame 3203 along the first direction Y are fixed to one of the first frames 3201 by welding.

In step A3, the seocnd ends of the two second frames 3202 and the second end of the reinforcing frame 3203 along the first direction Y are fixed to the other of the first frames 3201 by welding.

In the above steps, the first frame 3201 is fixedly connected to the second frame 3202 and the reinforcing frame 3203 by welding, and connection strength is high. For step A1, the two first frames 3201, the two second frames 3202, and all the reinforcing frames 3203 may be pre-fixed by using a framing machine or other tools, to achieve positioning to facilitate subsequent welding and improve welding accuracy of the frame 32. For step A2 and step A3, one ends of the two second frames 3202 and all the reinforcing frames 3203 are first fixed to one of the first frames 3201, that is, first ends of the two second frames 3202 and the reinforcing frames 3203 are positioned first, which also improves the welding accuracy of the frame 32. Moreover, during the welding in step A2 and step A3, the second frame 3202 and the reinforcing frame 3203 may be sequentially welded in the second direction X from one end of the first frame 3201 to the other end. In this way, a moving path during the welding can be shortened by either manual welding or automatic machine welding, which improves assembly efficiency of the frame 32.

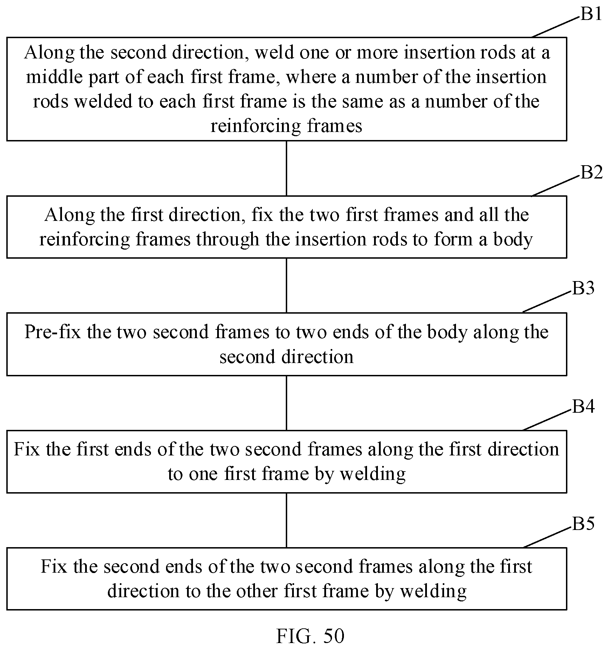

In another embodiment, as shown in FIG. 44(a) and FIG. 44(b), the frame 32 further includes insertion rods 3204. For step S2, as shown in FIG. 50, the assembling method includes the following steps.

In step B1, along the second direction X, a same number of insertion rods 3204 as the reinforcing frame 3203 are welded at a middle part of each of the two first frames 3201 respectively.

In this embodiment, the reinforcing frame 3203 is fixedly connected to the first frame 3201 through the insertion rod 3204. Therefore, a specific number of the insertion rod 3204 is equal to that of the reinforcing frame 3203. Moreover, a welding position of the insertion rod 3204 on the first frame 3201 should correspond to a mounting position of the reinforcing frame 3203 on the first frame 3201, so as to ensure that the photovoltaic module 3 is evenly stressed at all parts after the frame 32 is mounted on the laminate 31. In this step, the insertion rod 3204 and the first frame 3201 may be pre-fixed and then welded.

In step B2, along the first direction Y, the two first frames 3201 and all the reinforcing frames 3203 are fixed into an integral body through the insertion rods 3204.

In this step, two ends of each reinforcing frame 3203 along the first direction Y are fixedly connected to the insertion rods 3204 on the two first frames 3201 respectively. Since positions of the insertion rods 3204 have been determined, it is relatively convenient to connect the reinforcing frame 3203 and the insertion rods 3204.

In step B3, the two second frames 3202 are pre-fixed to two ends of the entirety along the second direction X.

In this embodiment, the frame 32 is assembled in a combination of insertion and welding. In this step, the two second frames 3202 may be pre-fixed by using a framing machine or other tools, to achieve positioning to facilitate subsequent welding of the second frame 3202 and the first frame 3201 and improve welding accuracy of the frame 32.

In step B4, the first ends of the two second frames 3202 along the first direction Y are welded and fixed to one of the first frames 3201.

In step B5, the second ends of the two second frames 3202 along the first direction Y are welded and fixed to the other of the first frames 3201.

For step B4 and step B5, the first ends of the two second frames 3202 are first fixed to one of the first frames 3201, that is, the first ends of the two second frames 3202 are positioned first, which also improves the welding accuracy of the frame 32. Moreover, during the welding in step B4 and step B5, the two second frames 3202 may be sequentially welded in the second direction X from one end of the first frame 3201 to the other end. In this way, a moving path during the welding can be shortened by either manual welding or automatic machine welding, which improves assembly efficiency of the frame 32.

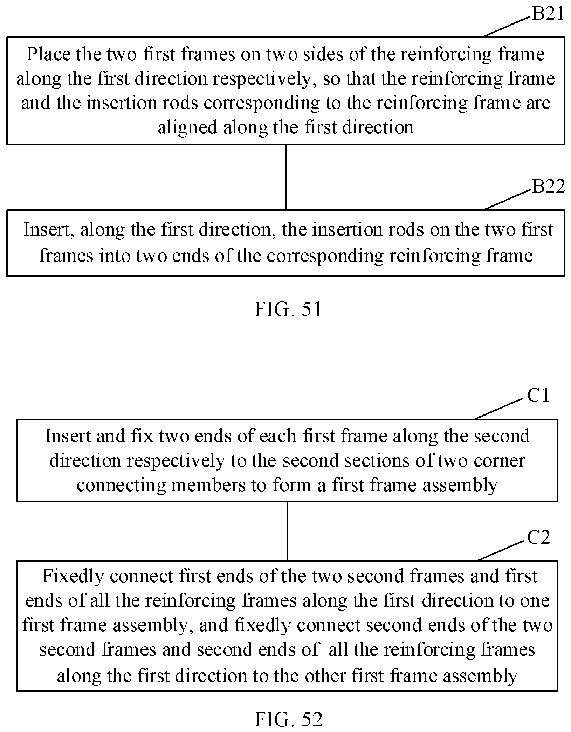

In an embodiment, as shown in FIG. 51, for step B2, the assembling method includes the following steps.

In step B21, the two first frames 3201 are placed on two sides of the reinforcing frame 3203 along the first direction Y respectively, so that each insertion rod 3204 and its corresponding reinforcing frame 3203 are aligned along the first direction Y.

In step B22, the insertion rods 3204 on the two first frames 3201 are simultaneously inserted into two ends of the corresponding reinforcing frame 3203 along the first direction Y.

In the above steps, all the reinforcing frames 3203 may be fixed at preset positions along the second direction X, and the two first frames 3201 are then placed on two sides of the reinforcing frames 3203 along the first direction Y, ensuring that the insertion rod 3204 and its corresponding reinforcing frame 3203 are aligned along the first direction Y. Then, the two first frames 3201 are simultaneously moved towards each other so that the insertion rods 3204 are inserted into two ends of the reinforcing frames 3203. That is, the two first frames 3201 and the reinforcing frames 3203 are fixed in one step. Especially when the frame 32 includes a plurality of reinforcing frames 3203, the assembly time can be greatly saved and the assembly efficiency of the frame 32 can be improved.

In another embodiment, as shown in FIG. 45(a) and FIG. 45(b), the frame 32 further includes corner connecting members 3205, and the corner connecting member 3205 includes a first section 3205A extending along the first direction Y and a second section 3205B extending along the second direction X. For step S2, as shown in FIG. 52, the assembling method includes the following steps.

In step C1, two ends of each first frame 3201 along the second direction X are respectively inserted into and fixed to the second sections 3205B of two corner connecting members 3205 to form a first frame assembly. As a result, two first frames 3201 form first frame assemblies.

In step C2, the first ends of the two second frames 3202 and the first end of the reinforcing frame 3203 along the first direction Y are fixedly connected to one of the first frame assemblies, and the second ends of the two second frames 3202 and the second end of the reinforcing frame 3203 along the first direction Y are fixedly connected to the other of the first frame assemblies.

In the above steps, the first frame 3201 and the second frame 3202 are fixedly connected through the corner connecting member 3205. First, two ends of the corner connecting members 3205 are fixed to two ends of the first frame 3201 along the second direction X to facilitate the subsequent connection of the second frame 3202 and the first frame 3201.

Regarding the method of fixedly connecting the first frame 3201 and the second frame 3202 through the corner connecting member 3205, the present invention also provides the following embodiments to realize fixation of the reinforcing frame 3203 and the first frame 3201.

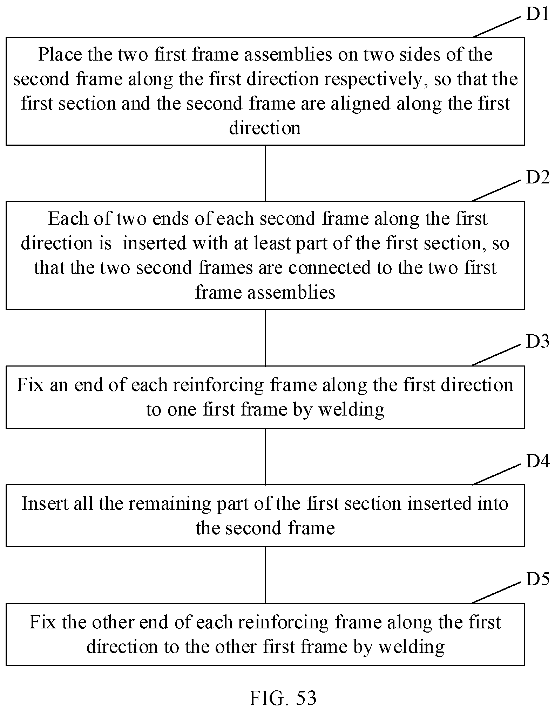

In an embodiment, as shown in FIG. 53, for step C2, the assembly method includes the following steps.

In step D1, the two first frame assemblies are placed on two sides of the second frame 3202 along the first direction Y respectively, so that the first section 3205A and the second frame 3202 are aligned along the first direction Y.

In step D2, each first section 3205A is partially inserted at the end of the corresponding second frame 3202 along the first direction Y, so that the two second frames 3202 are connected to the two first frame assemblies.

In step D1 and step D2 above, first, the two second frames 3202 are connected to the two first frame assemblies, but the first section 3205A of the corner connecting member is not completely inserted into the second frame 3202 to reserve a certain space in the first direction Y for the mounting of the reinforcing frame 3203. The two second frames 3202 may be inserted into the first frame assemblies at the same time, or may be inserted into the first frame assemblies in sequence, which is not limited in this embodiment.

In step D3, the first end of each reinforcing frame 3203 along the first direction Y is welded and fixed to one of the first frames 3201.

This step can realize positioning connections between all the reinforcing frames 3203 and one first frame 3201, which improves welding accuracy of the frame 32. When the number of the reinforcing frame 3203 is greater than or equal to 2, each reinforcing frame 3203 may be pre-fixed at a corresponding position. Then, a plurality of reinforcing frames 3203 are sequentially welded in the second direction X from the end of the first frame 3201 to the other end, which improves assembly accuracy and assembly efficiency of the frame 32.

In step D4, the remaining part of the first section 3205A is inserted into the corresponding second frame 3202.

In this step, the remaining part of the first section 3205A is pushed into the second frame 3202 to achieve a sealed and fixed connection between the first frame 3201 and the second frame 3202.

In step D5, the second end of each reinforcing frame 3203 along the first direction Y is welded and fixed to the other of the first frames 3201.

In this step, after each reinforcing frame 3203 is welded and fixed to the other of the first frames 3201, the assembly step of the frame 32 is completed, and a stable connection of the reinforcing frame 3203 and the second frame 3202 with the first frame 3201 is achieved.

In step D2 above, the first frame 3201 and the second frame 3202 are pre-connected rather than fixed in one step, which provides a certain adjustable space for the subsequent mounting process of the reinforcing frame 3203, making it more operable and improving a yield rate of the frame 32.

In another embodiment, as shown in FIG. 46(a) and FIG. 46(b), the frame 32 further includes an insertion rod 3204. Prior to or subsequent to step C1, the assembling method further includes: along the second direction X, welding a same number of insertion rods 3204 as the reinforcing frame 3203 at the middle part of each of the two first frames 3201 respectively.

In this embodiment, the reinforcing frame 3203 is fixedly connected to the first frame 3201 through the insertion rod 3204. Therefore, a specific number of the insertion rod 3204 is equal to that of the reinforcing frame 3203. Moreover, a welding position of the insertion rod 3204 on the first frame 3201 should correspond to a mounting position of the reinforcing frame 3203 on the first frame 3201, so as to ensure that the photovoltaic module 3 is evenly stressed at all parts after the frame 32 is mounted on the laminate 31. In this step, the insertion rod 3204 and the first frame 3201 may be pre-fixed and then welded.

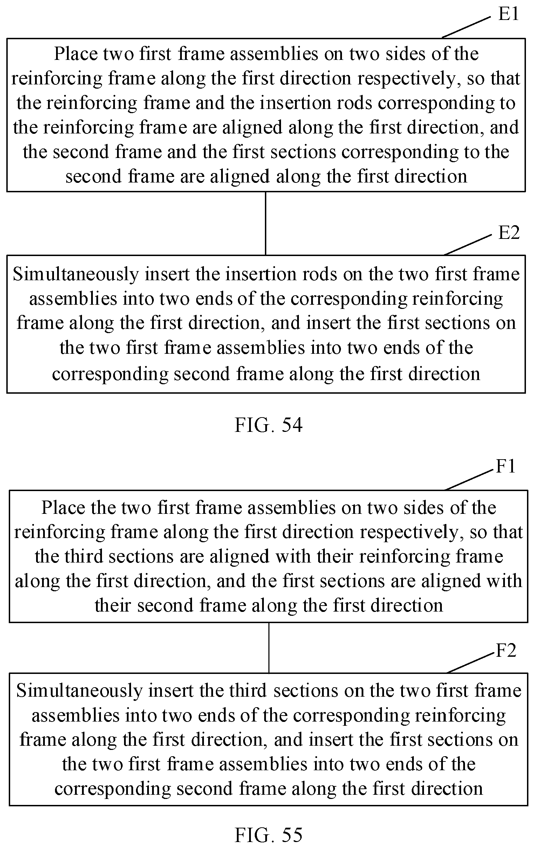

For step C2, as shown in FIG. 54, the assembly method includes the following steps.

In step E1, the two first frame assemblies are placed on two sides of the reinforcing frame 3203 along the first direction Y respectively, so that each insertion rod 3204 and its corresponding reinforcing frame 3203 are aligned along the first direction Y and each first section 3205A and corresponding second frame 3202 are aligned along the first direction Y.

In step E2, the insertion rods 3204 on the two first frame assemblies are simultaneously inserted into two ends of the corresponding reinforcing frames 3203 along the first direction Y, and the first sections 3205A on the two first frame assemblies are inserted into two ends of the corresponding second frames 3202 along the first direction Y.

In the above steps, the two second frames 3202 and all the reinforcing frames 3203 may be fixed at preset positions along the second direction X, ensuring that each insertion rod 3204 and its corresponding reinforcing frame 3203 are aligned along the first direction Y and each first section 3205A and its corresponding second frame 3202 are aligned along the first direction Y. Then, the two first frame assemblies are simultaneously moved towards each other so that the insertion rods 3204 are inserted into two ends of the reinforcing frames 3203. At the same time, the first sections 3205A are inserted into two ends of the second frames 3202. That is, fixation of the two first frames 3201 to the two second frames 3202 and the reinforcing frames 3203 is realized in one step. Especially when the frame 32 includes a plurality of reinforcing frames 3203, the assembly time can be greatly saved and the assembly efficiency of the frame 32 can be improved.

In another embodiment, as shown in FIG. 47(a) and FIG. 47(b), each first frame 3201 includes a plurality of first frame segments 3201A and a plurality of inserts 3201B, and the inserts 3201B each include a third section 3201Ba extending in the first direction Y and a fourth section 3201Bb extending in the second direction X. Prior to step C1, the assembling method further includes: forming the first frame 3201 according to the plurality of first frame segments 3201A through the plurality of inserts 3201B.

In this embodiment, the first frame segment 3201A and the insert 3201B have a split structure, and the plurality of first frame segments 3201A and the plurality of inserts 3201B are spliced to form the first frame 3201. The inserts 3201B each have a T-shaped structure, including a third section 3201Ba and a fourth section 3201Bb vertically connected. The first frame segment 3201A is fixedly connected to the fourth section 3201Ba of the insert 3201B, and two adjacent first frame segments 3201A along the second direction X are respectively connected to two ends of the fourth section 3201Bb of a same insert 3201B. The third section 3201Ba of the insert 3201B is configured to be fixedly connected to the reinforcing frame 3203. Therefore, a number of inserts 3201B included in each first frame 3201 is greater than or equal to that of the reinforcing frames 3203 of the frame 32.

For step C2, as shown in FIG. 55, the assembling method includes the following steps.

In step F1, the two first frame assemblies are placed on two sides of the reinforcing frame 3203 along the first direction Y respectively, so that each third sections 3201Ba and its corresponding reinforcing frame 3203 are aligned along the first direction Y and each first section 3205A and its corresponding second frame 3202 are aligned along the first direction Y.

In step F2, the third sections 3201Ba on the two first frame assemblies are inserted, for example simultaneously, into two ends of the corresponding reinforcing frames 3203 along the first direction Y, and the first sections 3205A on the two first frame assemblies are inserted into two ends of the corresponding second frame 3202 along the first direction Y.

In the above steps, the two second frames 3202 and all the reinforcing frames 3203 may be fixed at preset positions along the second direction X, ensuring that the third section 3201Ba of each insert 3201B and its corresponding reinforcing frame 3203 are aligned along the first direction Y and the first section 3205A of each corner connecting member 3205 and its corresponding second frame 3202 are aligned along the first direction Y. Then, the two first frame assemblies are simultaneously moved towards each other so that the third sections 3201Ba are inserted into two ends of the reinforcing frames 3203. At the same time, the first sections 3205A are inserted into two ends of the second frames 3202. That is, fixation of the two first frames 3201 to the two second frames 3202 and the reinforcing frames 3203 is realized in one step. Especially when the frame 32 includes a plurality of reinforcing frames 3203, the assembly time can be greatly saved and the assembly efficiency of the frame 32 can be improved.

In this embodiment, the fixed connections between the first frame 3201, the second frame 3202, and the reinforcing frame 3203 are all achieved by insertion, and there will be a space for detachment and separation later. If one of the first frame 3201, the second frame 3202, and the reinforcing frame 3203 is damaged, it may be replaced with a new one and continued to be used, which prolongs the service life of the frame 32 and reduces the cost of the photovoltaic module 3.

Based on the above, assembling the frame 32 with the above assembly method helps improve assembly efficiency and a yield rate of the frame 32.

The above are merely preferred embodiments of the present invention and are not intended to limit the present invention. For those skilled in the art, the present invention may be subject to various changes and variations. The scope of the present invention shall be defined by the appended claims.

## Claims

1. A photovoltaic facility, comprising:
a color steel tile (2);
a clamp (1), connected to the color steel tile (2) and comprising a clamping body (11); and
a photovoltaic module (3), located on one side of the clamping body (11) and connected to the clamping body (11) through a connecting member (4),
wherein the photovoltaic module (3) comprises a laminate (31) and a frame (32) connected to a back side of the laminate (31), the frame (32) is provided with an opening (321), and the connecting member (4) extends into the opening (321) and abuts against a sidewall of the opening (321),
wherein the clamp (1) comprises two symmetrically arranged clamping bodies (11), along a width direction of the photovoltaic module (3), a clamping space (12) is provided between the two clamping bodies (11), and part of the color steel tile (2) is capable of extending into the clamping space (12), and
wherein a sidewall of the clamping space (12) extends along a height direction of the photovoltaic module (3) or a sidewall of the clamping space (12) has an arc-shaped structure that protrudes outwards along a width direction of the photovoltaic module (3).

2. The photovoltaic facility according to claim 1, wherein the sidewall of the opening (321) is provided with an extension portion (322), the connecting member (4) comprises an engaging groove (41), and the extension portion (322) extends into the engaging groove (41) and is engaged with the engaging groove (41),
wherein the engaging groove (41) comprises a first engaging portion (411), the first engaging portion (411) is located in the frame (32), and the first engaging portion (411) is capable of abutting against a sidewall of the frame (32) along a width direction of the photovoltaic module (3), and
wherein along a height direction of the photovoltaic module (3), the first engaging portion (411) comprises a first end abutting against a top wall of the frame (32) and a second end abutting against the extension portion (322).

3. The photovoltaic facility according to claim 1, wherein the clamp (1) further comprises a first fastener (6) configured to connect the connecting member (4) and the clamping body (11),
the clamping body (11) is provided with a first mounting hole (111), and the first fastener (6) is connected to the clamping body (11) through the first mounting hole (111),
the connecting member (4) is provided with a second mounting hole, and the first fastener (6) is connected to the connecting member (4) through the second mounting hole, and
the second mounting hole is a waist-shaped hole, and when the first fastener (6) extends into the second mounting hole, the connecting member (4) is movable relative to the first fastener (6).

4. The photovoltaic facility according to claim 1, wherein the connecting member (4) comprises a limiting groove (43) extending towards the color steel tile (2) along a height direction of the photovoltaic module (3), and part of the frame (32) is received in the limiting groove (43),
wherein the photovoltaic facility further comprises a limiting member (7) located on a side of the connecting member (4) away from the clamping body (11) and connected to the connecting member (4), and
wherein the limiting member (7) comprises a limiting portion (71) capable of extending into the limiting groove (43), and along a width direction of the photovoltaic module (3), the limiting portion (71) comprises a first end abutting against a sidewall of the limiting groove (43) and a second end abutting against the frame (32).

5. The photovoltaic facility according to claim 4, wherein along the width direction of the photovoltaic module (3), the sidewall of the limiting groove (43) extends obliquely away from the frame (32), and the limiting portion (71) comprises an inclined guide surface (711) configured to fit the sidewall of the limiting groove (43).

6. The photovoltaic facility according to claim 1, wherein the frame (32) comprises two first frames (3201) arranged opposite to each other along a width direction of the photovoltaic module (3),
and/or the frame (32) comprises two second frames (3202) arranged opposite to each other along a length direction of the photovoltaic module (3).

7. The photovoltaic facility according to claim 6, wherein the frame (32) further comprises at least one reinforcing frame (3203), and
wherein along the length direction of the photovoltaic module (3), the at least one reinforcing frame (3203) is arranged between the two second frames (3202), and/or along the width direction of the photovoltaic module (3), the at least one reinforcing frame (3203) is arranged between the two first frames (3201).

8. The photovoltaic facility according to claim 1, wherein the frame (32) comprises two first frames (3201) arranged opposite to each other along a width direction (Y) of the photovoltaic module (3), two second frames (3202) opposite to each other along a length direction (X) of the photovoltaic module (3), and a reinforcing frame (3203) connecting the two first frames (3201),
two ends of each first frame are welded to the two second frames respectively, and a middle part of each first frame is welded to the reinforcing frame to form the frame.

9. The photovoltaic facility according to claim 1, wherein the frame (32) comprises two first frames (3201) arranged opposite to each other along a width direction of the photovoltaic module, two second frames (3202) opposite to each other along a length direction of the photovoltaic module, a reinforcing frame (3203), and insertion rods (3204),
two ends of each first frame are welded to the two second frames respectively, a middle part of each first frame is welded to a first end of the insertion rod (3204), and a second end of the insertion rod (3204) is in insertion fit with the reinforcing frame (3203).

10. The photovoltaic facility according to claim 1, wherein the frame (32) comprises two first frames (3201) arranged opposite to each other along a width direction of the photovoltaic module, two second frames (3202) opposite to each other along a length direction of the photovoltaic module, a reinforcing frame (3203), and corner connecting members (3205),
each corner connecting member (3205) comprises a first section (3205A) extending along the width direction of the photovoltaic module and a second section (3205B) extending along the length direction of the photovoltaic module, and
two ends of each first frame (3201) are inserted into the second sections (3205B) of two corner connecting members (3205) respectively, two ends of each second frame (3202) are inserted into the first sections (3205A) of two corner connecting members (3205) respectively, and a middle part of each first frame is welded to the reinforcing frame (3203).

11. The photovoltaic facility according to claim 1, wherein the frame (32) comprises two first frames (3201) arranged opposite to each other along a width direction of the photovoltaic module, two second frames (3202) opposite to each other along a length direction of the photovoltaic module, a reinforcing frame (3203), insertion rods (3204), and corner connecting members (3205),
each corner connecting member (3205) comprises a first section (3205A) extending along the width direction of the photovoltaic module and a second section (3205B) extending along the length direction of the photovoltaic module, and
two ends of each first frame (3201) are inserted into the second sections (3205B) of two corner connecting members respectively, two ends of each second frame (3202) are inserted into the first sections of two corner connecting members (3205) respectively, a middle part of each first frame (3201) is welded to a first end of the insertion rod (3204), and a second end of the insertion rod (3204) is in insertion fit with the reinforcing frame (3203).

12. The photovoltaic facility according to claim 1, wherein the frame (32) comprises two first frames (3201) arranged opposite to each other along a width direction of the photovoltaic module, two second frames (3202) opposite to each other along a length direction of the photovoltaic module, a reinforcing frame (3203), and corner connecting members (3205),
each first frame (3201) comprises a plurality of first frame segments (3201A) and one or more inserts (3201B), each insert (3201B) comprises a third section (3201Ba) extending along the width direction of the photovoltaic module and a fourth section (3201Bb) extending along the length direction of the photovoltaic module, and adjacent first frame segments (3201A) are connected by the third section (3201Ba),
each corner connecting member (3205) comprises a first section (3205A) extending along the width direction of the photovoltaic module and a second section (3205B) extending along the length direction of the photovoltaic module, and
two ends of each first frame (3201) are inserted into the second sections (3205B) of two corner connecting members (3205) respectively, two ends of each second frame (3202) are inserted into the first sections (3205A) of two corner connecting members (3205) respectively, and the fourth section (3201Bb) of the insert is in insertion fit with the reinforcing frame (3203).

13. The photovoltaic facility according to claim 1, wherein the clamp (1) comprises two clamp bodies (11) defining a clamping space (12),
each color steel tile (2) comprises a male rib (22) and a female rib (21), and the male rib (22) and the female rib (21) of two adjacent color steel tiles (2) are engaged with each other and accommodated in the clamping space (12),
first ends of the two clamp bodies (11) are fixed, and second ends of the two clamp bodies (11) are fixed to the two adjacent color steel tiles (2) respectively, and
the photovoltaic facility further comprises a supporter (10), and the supporter (10) comprises a first end engaged with the male rib (22) and the female rib (21) of two adjacent color steel tiles (2) and a second end fixed to a ground or a roof.

## Patentansprüche

1. Photovoltaikanlage, umfassend:
eine Buntstahlfliese (2);
eine Klemme (1), die mit der Buntstahlfliese (2) verbunden ist und einen Klemmkörper (11) umfasst; und
ein Photovoltaikmodul (3), das sich auf einer Seite des Klemmkörpers (11) befindet und über ein Verbindungselement (4) mit dem Klemmkörper (11) verbunden ist,
wobei das Photovoltaikmodul (3) ein Laminat (31) und einen mit einer Rückseite des Laminats (31) verbundenen Rahmen (32) umfasst, der Rahmen (32) mit einer Öffnung (321) versehen ist und das Verbindungselement (4) sich in die Öffnung (321) erstreckt und an einer Seitenwand der Öffnung (321) anliegt,
wobei die Klemme (1) zwei symmetrisch angeordnete Klemmkörper (11) entlang einer Breitenrichtung des Photovoltaikmoduls (3) umfasst, ein Klemmraum (12) zwischen den beiden Klemmkörpern (11) vorgesehen ist und ein Teil der Buntstahlfliese (2) sich in den Klemmraum (12) erstrecken kann, und
wobei sich eine Seitenwand des Klemmraums (12) entlang einer Höhenrichtung des Photovoltaikmoduls (3) erstreckt oder eine Seitenwand des Klemmraums (12) eine bogenförmige Struktur aufweist, die entlang einer Breitenrichtung des Photovoltaikmoduls (3) nach außen vorsteht.

2. Photovoltaikanlage nach Anspruch 1, wobei die Seitenwand der Öffnung (321) mit einem Verlängerungsabschnitt (322) versehen ist, das Verbindungselement (4) eine Eingriffsnut (41) aufweist und sich der Verlängerungsabschnitt (322) in die Eingriffsnut (41) erstreckt und mit der Eingriffsnut (41) in Eingriff steht,
wobei die Eingriffsnut (41) einen ersten Eingriffsabschnitt (411) umfasst, der erste Eingriffsabschnitt (411) sich im Rahmen (32) befindet und der erste Eingriffsabschnitt (411) in der Lage ist, entlang einer Breitenrichtung des Photovoltaikmoduls (3) an einer Seitenwand des Rahmens (32) anzuliegen, und
wobei entlang einer Höhenrichtung des Photovoltaikmoduls (3) der erste Eingriffsabschnitt (411) ein erstes Ende, das an einer oberen Wand des Rahmens (32) anliegt, und ein zweites Ende, das an dem Verlängerungsabschnitt (322) anliegt, umfasst.

3. Photovoltaikanlage nach Anspruch 1, wobei die Klemme (1) ferner ein erstes Befestigungselement (6) umfasst, das konfiguriert ist, um das Verbindungselement (4) und den Klemmkörper (11) zu verbinden,
der Klemmkörper (11) mit einem ersten Montageloch (111) versehen ist und das erste Befestigungselement (6) durch das erste Montageloch (111) mit dem Klemmkörper (11) verbunden ist,
das Verbindungselement (4) mit einem zweiten Montageloch versehen ist und das erste Befestigungselement (6) durch das zweite Montageloch mit dem Verbindungselement (4) verbunden ist, und
das zweite Montageloch ein taillenförmiges Loch ist, und wenn sich das erste Befestigungselement (6) in das zweite Montageloch erstreckt, das Verbindungselement (4) relativ zum ersten Befestigungselement (6) beweglich ist.

4. Photovoltaikanlage nach Anspruch 1, wobei das Verbindungselement (4) eine Begrenzungsnut (43) aufweist, die sich in Höhenrichtung des Photovoltaikmoduls (3) in Richtung der Buntstahlfliese (2) erstreckt, und ein Teil des Rahmens (32) in der Begrenzungsnut (43) aufgenommen ist,
wobei die Photovoltaikanlage ferner ein Begrenzungselement (7) umfasst, das sich auf einer dem Klemmkörper (11) abgewandten Seite des Verbindungselements (4) befindet und mit dem Verbindungselement (4) verbunden ist, und
wobei das Begrenzungselement (7) einen Begrenzungsabschnitt (71) umfasst, der sich in die Begrenzungsnut (43) hinein erstrecken kann, und der Begrenzungsabschnitt (71) entlang einer Breitenrichtung des Photovoltaikmoduls (3) ein erstes Ende, das an einer Seitenwand der Begrenzungsnut (43) anliegt, und ein zweites Ende, das an dem Rahmen (32) anliegt, umfasst.

5. Photovoltaikanlage nach Anspruch 4, wobei sich die Seitenwand der Begrenzungsnut (43) entlang der Breitenrichtung des Photovoltaikmoduls (3) schräg vom Rahmen (32) weg erstreckt und der Begrenzungsabschnitt (71) eine geneigte Führungsfläche (711) umfasst, die konfiguriert ist, um an die Seitenwand der Begrenzungsnut (43) zu passen.

6. Photovoltaikanlage nach Anspruch 1, wobei der Rahmen (32) zwei erste Rahmen (3201) umfasst, die einander entlang einer Breitenrichtung des Photovoltaikmoduls (3) gegenüberliegend angeordnet sind,
und/oder der Rahmen (32) zwei zweite Rahmen (3202) umfasst, die einander entlang einer Längsrichtung des Photovoltaikmoduls (3) gegenüberliegend angeordnet sind.

7. Photovoltaikanlage nach Anspruch 6, wobei der Rahmen (32) ferner mindestens einen Verstärkungsrahmen (3203) umfasst, und
wobei entlang der Längsrichtung des Photovoltaikmoduls (3) der mindestens eine Verstärkungsrahmen (3203) zwischen den beiden zweiten Rahmen (3202) angeordnet ist und/oder entlang der Breitenrichtung des Photovoltaikmoduls (3) der mindestens eine Verstärkungsrahmen (3203) zwischen den beiden ersten Rahmen (3201) angeordnet ist.

8. Photovoltaikanlage nach Anspruch 1, wobei der Rahmen (32) zwei erste Rahmen (3201), die einander entlang einer Breitenrichtung (Y) des Photovoltaikmoduls (3) gegenüberliegend angeordnet sind, zwei zweite Rahmen (3202), die einander entlang einer Längsrichtung (X) des Photovoltaikmoduls (3) gegenüberliegen, und einen Verstärkungsrahmen (3203), der die beiden ersten Rahmen (3201) verbindet, umfasst,
zwei Enden jedes ersten Rahmens jeweils mit den beiden zweiten Rahmen verschweißt sind und ein Mittelteil jedes ersten Rahmens mit dem Verstärkungsrahmen verschweißt ist, um den Rahmen zu bilden.

9. Photovoltaikanlage nach Anspruch 1, wobei der Rahmen (32) zwei erste Rahmen (3201), die einander entlang einer Breitenrichtung des Photovoltaikmoduls gegenüberliegend angeordnet sind, zwei zweite Rahmen (3202), die einander entlang einer Längsrichtung des Photovoltaikmoduls gegenüberliegen, einen Verstärkungsrahmen (3203) und Einsteckstangen (3204) umfasst,
zwei Enden jedes ersten Rahmens jeweils mit den zwei zweiten Rahmen verschweißt sind, ein Mittelteil jedes ersten Rahmens mit einem ersten Ende der Einsteckstange (3204) verschweißt ist und ein zweites Ende der Einsteckstange (3204) in Einsteckpassung mit dem Verstärkungsrahmen (3203) steht.

10. Photovoltaikanlage nach Anspruch 1, wobei der Rahmen (32) zwei erste Rahmen (3201), die einander entlang einer Breitenrichtung des Photovoltaikmoduls gegenüberliegend angeordnet sind, zwei zweite Rahmen (3202), die einander entlang einer Längsrichtung des Photovoltaikmoduls gegenüberliegen, einen Verstärkungsrahmen (3203) und Eckverbindungselemente (3205) umfasst,
jedes Eckverbindungselement (3205) einen ersten Abschnitt (3205A), der sich entlang der Breitenrichtung des Photovoltaikmoduls erstreckt, und einen zweiten Abschnitt (3205B), der sich entlang der Längsrichtung des Photovoltaikmoduls erstreckt, umfasst, und
zwei Enden jedes ersten Rahmens (3201) in die zweiten Abschnitte (3205B) von jeweils zwei Eckverbindungselementen (3205) eingesetzt werden, zwei Enden jedes zweiten Rahmens (3202) in die ersten Abschnitte (3205A) von jeweils zwei Eckverbindungselementen (3205) eingesetzt werden und ein Mittelteil jedes ersten Rahmens an den Verstärkungsrahmen (3203) geschweißt wird.

11. Photovoltaikanlage nach Anspruch 1, wobei der Rahmen (32) zwei erste Rahmen (3201), die einander entlang einer Breitenrichtung des Photovoltaikmoduls gegenüberliegend angeordnet sind, zwei zweite Rahmen (3202), die einander entlang einer Längsrichtung des Photovoltaikmoduls gegenüberliegen, einen Verstärkungsrahmen (3203), Einsteckstäbe (3204) und Eckverbindungselemente (3205) umfasst,
jedes Eckverbindungselement (3205) einen ersten Abschnitt (3205A), der sich entlang der Breitenrichtung des Photovoltaikmoduls erstreckt, und einen zweiten Abschnitt (3205B), der sich entlang der Längsrichtung des Photovoltaikmoduls erstreckt, umfasst, und
zwei Enden jedes ersten Rahmens (3201) in die zweiten Abschnitte (3205B) von jeweils zwei Eckverbindungselementen eingesetzt werden, zwei Enden jedes zweiten Rahmens (3202) in die ersten Abschnitte von jeweils zwei Eckverbindungselementen (3205) eingesetzt werden, ein Mittelteil jedes ersten Rahmens (3201) an ein erstes Ende der Einsteckstange (3204) geschweißt wird und ein zweites Ende der Einsteckstange (3204) in Einsteckpassung mit dem Verstärkungsrahmen (3203) steht.

12. Photovoltaikanlage nach Anspruch 1, wobei der Rahmen (32) zwei erste Rahmen (3201), die einander entlang einer Breitenrichtung des Photovoltaikmoduls gegenüberliegend angeordnet sind, zwei zweite Rahmen (3202), die einander entlang einer Längsrichtung des Photovoltaikmoduls gegenüberliegen, einen Verstärkungsrahmen (3203) und Eckverbindungselemente (3205) umfasst,
jeder erste Rahmen (3201) eine Vielzahl von ersten Rahmensegmenten (3201A) und einen oder mehrere Einsätze (3201B) umfasst, jeder Einsatz (3201B) einen dritten Abschnitt (3201Ba), der sich entlang der Breitenrichtung des Photovoltaikmoduls erstreckt, und einen vierten Abschnitt (3201Bb), der sich entlang der Längsrichtung des Photovoltaikmoduls erstreckt, umfasst, und benachbarte erste Rahmensegmente (3201A) durch den dritten Abschnitt (3201Ba) verbunden sind,
jedes Eckverbindungselement (3205) einen ersten Abschnitt (3205A), der sich entlang der Breitenrichtung des Photovoltaikmoduls erstreckt, und einen zweiten Abschnitt (3205B), der sich entlang der Längsrichtung des Photovoltaikmoduls erstreckt, umfasst, und
zwei Enden jedes ersten Rahmens (3201) in die zweiten Abschnitte (3205B) von jeweils zwei Eckverbindungselementen (3205) eingesetzt werden, zwei Enden jedes zweiten Rahmens (3202) in die ersten Abschnitte (3205A) von jeweils zwei Eckverbindungselementen (3205) eingesetzt werden und der vierte Abschnitt (3201Bb) des Einsatzes in Einsteckpassung mit dem Verstärkungsrahmen (3203) steht.

13. Photovoltaikanlage nach Anspruch 1, wobei die Klemme (1) zwei Klemmkörper (11) umfasst, die einen Klemmraum (12) begrenzen,
jede Buntstahlfliese (2) eine Einsteckrippe (22) und eine Aufnahmerippe (21) umfasst und die Einsteckrippe (22) und die Aufnahmerippe (21) zweier benachbarter Buntstahlfliesen (2) miteinander in Eingriff stehen und im Klemmraum (12) aufgenommen sind,
erste Enden der beiden Klemmkörper (11) befestigt sind und die zweiten Enden der beiden Klemmkörper (11) jeweils an den beiden benachbarten Buntstahlfliesen (2) befestigt sind, und
die Photovoltaikanlage ferner einen Träger (10) umfasst, und der Träger (10) ein erstes Ende, das mit der Einsteckrippe (22) und der Aufnahmerippe (21) zweier benachbarter Buntstahlfliesen (2) in Eingriff steht, und ein zweites Ende, das am Boden oder einem Dach befestigt ist, umfasst.

## Revendications

1. Installation photovoltaïque, comprenant:
une tuile en acier de couleur (2);
une pince (1), reliée à la tuile en acier de couleur (2) et comprenant un corps de serrage (11); et
un module photovoltaïque (3), situé sur un côté du corps de serrage (11) et relié au corps de serrage (11) par l'intermédiaire d'un élément de liaison (4),
dans laquelle le module photovoltaïque (3) comprend un laminat (31) et un cadre (32) relié à un côté arrière du laminat (31), le cadre (32) est pourvu d'une ouverture (321), et l'élément de liaison (4) s'étend dans l'ouverture (321) et vient en butée contre une paroi latérale de l'ouverture (321),
dans laquelle la pince (1) comprend deux corps de serrage (11) disposés symétriquement, le long d'une direction de largeur du module photovoltaïque (3), un espace de serrage (12) est prévu entre les deux corps de serrage (11), et une part de la tuile en acier de couleur (2) est capable de s'étendre dans l'espace de serrage (12), et
dans laquelle une paroi latérale de l'espace de serrage (12) s'étend le long d'une direction de hauteur du module photovoltaïque (3) ou une paroi latérale de l'espace de serrage (12) a une structure en forme d'arc qui fait saillie vers l'extérieur le long d'une direction de largeur du module photovoltaïque (3).

2. Installation photovoltaïque selon la revendication 1, dans laquelle la paroi latérale de l'ouverture (321) est pourvue d'une partie d'extension (322), l'élément de liaison (4) comprend une rainure de mise en prise (41), et la partie d'extension (322) s'étend dans la rainure de mise en prise (41) et est en prise avec la rainure de mise en prise (41),
dans laquelle la rainure de mise en prise (41) comprend une première partie de mise en prise (411), la première partie de mise en prise (411) est située dans le cadre (32), et la première partie de mise en prise (411) est capable de venir en butée contre une paroi latérale du cadre (32) le long d'une direction de largeur du module photovoltaïque (3), et
dans laquelle, le long d'une direction de hauteur du module photovoltaïque (3), la première partie de mise en prise (411) comprend une première extrémité venant en butée contre une paroi supérieure du cadre (32) et une seconde extrémité venant en butée contre la partie d'extension (322).

3. Installation photovoltaïque selon la revendication 1, dans laquelle la pince (1) comprend en outre une première attache (6) conçue pour relier l'élément de liaison (4) et le corps de serrage (11),
le corps de serrage (11) est pourvu d'un premier trou de montage (111), et la première attache (6) est reliée au corps de serrage (11) par le premier trou de montage (111),
l'élément de liaison (4) est pourvu d'un second trou de montage, et la première attache (6) est reliée à l'élément de liaison (4) par le second trou de montage, et
le second trou de montage est un trou en forme de taille, et lorsque la première attache (6) s'étend dans le second trou de montage, l'élément de liaison (4) est mobile par rapport à la première attache (6).

4. Installation photovoltaïque selon la revendication 1, dans laquelle l'élément de liaison (4) comprend une rainure de limitation (43) s'étendant vers la tuile en acier de couleur (2) le long d'une direction de hauteur du module photovoltaïque (3), et une part du cadre (32) est reçue dans la rainure de limitation (43),
dans laquelle l'installation photovoltaïque comprend en outre un élément de limitation (7) situé sur un côté de l'élément de liaison (4) éloigné du corps de serrage (11) et relié à l'élément de liaison (4), et
dans laquelle l'élément de limitation (7) comprend une partie de limitation (71) capable de s'étendre dans la rainure de limitation (43), et le long d'une direction de largeur du module photovoltaïque (3), la partie de limitation (71) comprend une première extrémité venant en butée contre une paroi latérale de la rainure de limitation (43) et une seconde extrémité venant en butée contre le cadre (32).

5. Installation photovoltaïque selon la revendication 4, dans laquelle le long de la direction de largeur du module photovoltaïque (3), la paroi latérale de la rainure de limitation (43) s'étend obliquement loin du cadre (32), et la partie de limitation (71) comprend une surface de guidage inclinée (711) conçue pour s'adapter à la paroi latérale de la rainure de limitation (43).

6. Installation photovoltaïque selon la revendication 1, dans laquelle le cadre (32) comprend deux premiers cadres (3201) disposés à l'opposé l'un de l'autre le long d'une direction de largeur du module photovoltaïque (3),
et/ou le cadre (32) comprend deux seconds cadres (3202) disposés à l'opposé l'un de l'autre le long d'une direction de longueur du module photovoltaïque (3).

7. Installation photovoltaïque selon la revendication 6, dans laquelle le cadre (32) comprend en outre au moins un cadre de renforcement (3203), et
dans laquelle, le long de la direction de longueur du module photovoltaïque (3), l'au moins un cadre de renforcement (3203) est disposé entre les deux seconds cadres (3202), et/ou le long de la direction de largeur du module photovoltaïque (3), l'au moins un cadre de renforcement (3203) est disposé entre les deux premiers cadres (3201).

8. Installation photovoltaïque selon la revendication 1, dans laquelle le cadre (32) comprend deux premiers cadres (3201) disposés à l'opposé l'un de l'autre le long d'une direction de largeur (Y) du module photovoltaïque (3), deux seconds cadres (3202) opposés l'un à l'autre le long d'une direction de longueur (X) du module photovoltaïque (3), et un cadre de renforcement (3203) reliant les deux premiers cadres (3201),
deux extrémités de chaque premier cadre sont soudées respectivement aux deux seconds cadres, et une part centrale de chaque premier cadre est soudée au cadre de renforcement pour former le cadre.

9. Installation photovoltaïque selon la revendication 1, dans laquelle le cadre (32) comprend deux premiers cadres (3201) disposés à l'opposé l'un de l'autre le long d'une direction de largeur du module photovoltaïque, deux seconds cadres (3202) opposés l'un à l'autre le long d'une direction de longueur du module photovoltaïque, un cadre de renforcement (3203), et des tiges d'insertion (3204),
deux extrémités de chaque premier cadre sont soudées respectivement aux deux seconds cadres, une part centrale de chaque premier cadre est soudée à une première extrémité de la tige d'insertion (3204), et une seconde extrémité de la tige d'insertion (3204) est en ajustement d'insertion avec le cadre de renforcement (3203) .

10. Installation photovoltaïque selon la revendication 1, dans laquelle le cadre (32) comprend deux premiers cadres (3201) disposés à l'opposé l'un de l'autre le long d'une direction de largeur du module photovoltaïque, deux seconds cadres (3202) opposés l'un à l'autre le long d'une direction de longueur du module photovoltaïque, un cadre de renforcement (3203), et des éléments de liaison d'angle (3205),
chaque élément de liaison d'angle (3205) comprend une première section (3205A) s'étendant le long de la direction de largeur du module photovoltaïque et une deuxième section (3205B) s'étendant le long de la direction de longueur du module photovoltaïque, et
deux extrémités de chaque premier cadre (3201) sont insérées dans les deuxièmes sections (3205B) de deux éléments de liaison d'angle (3205) respectivement, deux extrémités de chaque second cadre (3202) sont insérées dans les premières sections (3205A) de deux éléments de liaison d'angle (3205) respectivement, et une part centrale de chaque premier cadre est soudée au cadre de renforcement (3203).

11. Installation photovoltaïque selon la revendication 1, dans laquelle le cadre (32) comprend deux premiers cadres (3201) disposés à l'opposé l'un de l'autre le long d'une direction de largeur du module photovoltaïque, deux seconds cadres (3202) opposés l'un à l'autre le long d'une direction de longueur du module photovoltaïque, un cadre de renforcement (3203), des tiges d'insertion (3204), et des éléments de liaison d'angle (3205),
chaque élément de liaison d'angle (3205) comprend une première section (3205A) s'étendant le long de la direction de largeur du module photovoltaïque et une deuxième section (3205B) s'étendant le long de la direction de longueur du module photovoltaïque, et
deux extrémités de chaque premier cadre (3201) sont insérées respectivement dans les deuxièmes sections (3205B) de deux éléments de liaison d'angle, deux extrémités de chaque second cadre (3202) sont insérées respectivement dans les premières sections de deux éléments de liaison d'angle (3205), une part centrale de chaque premier cadre (3201) est soudée à une première extrémité de la tige d'insertion (3204), et une seconde extrémité de la tige d'insertion (3204) est en ajustement d'insertion avec le cadre de renforcement (3203) .

12. Installation photovoltaïque selon la revendication 1, dans laquelle le cadre (32) comprend deux premiers cadres (3201) disposés à l'opposé l'un de l'autre le long d'une direction de largeur du module photovoltaïque, deux seconds cadres (3202) opposés l'un à l'autre le long d'une direction de longueur du module photovoltaïque, un cadre de renforcement (3203), et des éléments de liaison d'angle (3205),
chaque premier cadre (3201) comprend une pluralité de premiers segments de cadre (3201A) et un ou plusieurs inserts (3201B), chaque insert (3201B) comprend une troisième section (3201Ba) s'étendant le long de la direction de largeur du module photovoltaïque et une quatrième section (3201Bb) s'étendant le long de la direction de longueur du module photovoltaïque, et les premiers segments de cadre (3201A) adjacents sont reliés par la troisième section (3201Ba),
chaque élément de liaison d'angle (3205) comprend une première section (3205A) s'étendant le long de la direction de largeur du module photovoltaïque et une deuxième section (3205B) s'étendant le long de la direction de longueur du module photovoltaïque, et
deux extrémités de chaque premier cadre (3201) sont insérées dans les deuxièmes sections (3205B) de deux éléments de liaison d'angle (3205) respectivement, deux extrémités de chaque second cadre (3202) sont insérées dans les premières sections (3205A) de deux éléments de liaison d'angle (3205) respectivement, et la quatrième section (3201Bb) de l'insert est en ajustement d'insertion avec le cadre de renforcement (3203).

13. Installation photovoltaïque selon la revendication 1, dans laquelle la pince (1) comprend deux corps de pince (11) définissant un espace de serrage (12),
chaque tuile en acier de couleur (2) comprend une nervure mâle (22) et une nervure femelle (21), et la nervure mâle (22) et la nervure femelle (21) de deux tuiles en acier de couleur (2) adjacentes sont en prise l'une avec l'autre et logées dans l'espace de serrage (12),
des premières extrémités des deux corps de pince (11) sont fixées, et des secondes extrémités des deux corps de pince (11) sont fixées aux deux tuiles d'acier de couleur (2) adjacentes respectivement, et
l'installation photovoltaïque comprend en outre un dispositif de support (10), et le dispositif de support (10) comprend une première extrémité en prise avec la nervure mâle (22) et la nervure femelle (21) de deux tuiles en acier de couleur (2) adjacentes et une seconde extrémité fixée à un sol ou à un toit.
